# EUROPEAN PATENT APPLICATION

(11) **EP 4 845 074 A1**
(43) Date of publication of application: **25.11.2026**
(21) Application number: 24917790.8
(22) Date of filing: 19.01.2024
(51) Int. Cl.: H04L 1/1829

(54) **DATA SENDING AND RECEIVING METHOD AND APPARATUS, AND COMMUNICATION SYSTEM**

(71) Applicant: 1FINITY INC., Kawasaki-shi, Kanagawa 211-8588 (JP)
(72) Inventor: LI, Guorong, Beijing 100022 (CN); YI, Su, Beijing 100022 (CN); JIA, Meiyi, Beijing 100022 (CN); WANG, Xin, Beijing 100022 (CN)
(74) Representative: Haseltine Lake Kempner LLP
(86) International application number: PCT/CN2024/073315
(87) International publication number: WO 2025/152167

(57) **Abstract**

The present disclosure provides a method of transmitting and receiving data and apparatus, and a communication system. The method of transmitting and receiving data includes: transmitting an RLC service data unit (RLC SDU) or an RLC SDU segment in an acknowledged mode (AM) to a peer device; and performing at least one retransmission of the RLC SDU or the RLC SDU segment, before an RLC status protocol data unit (RLC STATUS PDU) of the peer device is received.

## Description

### Technical Field

Embodiments of the present disclosure relate to the field of wireless communication technologies.

### Background

An Extended Reality (XR) service is introduced in the standardization process of the 5^{th} Generation Mobile Communication Technology (5G) under the 3^{rd} Generation Partnership Project (3GPP). The XR service refers to all human-computer interactions generated by a combination of real and virtual environments, computer technologies and wearable devices. The XR service may include a virtual reality (VR) service, an augmented reality (AR) service, and a mixed reality (MR) service. Research on enhancements to the XR service starts in Release 18.

It should be noted that the above introduction to the background is merely provided for clear and complete explanation of technical solutions of the present disclosure and for easy understanding by those skilled in the art. And it should not be understood that these technical solutions are known to those skilled in the art only because they are described in the background of the present disclosure.

### Summary

The inventors found that an XR service with a small packet delay budget (PDB) may be transmitted using an RLC acknowledged mode (AM), in order to meet requirements of both low delay and high reliability.

If the RLC acknowledged mode is used, retransmission at an RLC layer is triggered by receiving a status report from a peer device. However, the status report may not be received by an RLC transmitting side immediately, which may result in failure to complete transmission of the XR service within the packet delay budget.

Furthermore, the retransmission at the RLC layer consumes radio resources, blocks new transmissions, and consequently affects transmission of other service data.

In order to solve at least one of the above problems or other similar problems, embodiments of the present disclosure provide a method of transmitting and receiving data, apparatus, and a communication system.

According to one aspect of the embodiments of the present disclosure, there is provided an apparatus of transmitting and receiving data, applied to/configured in a terminal equipment, including:
a first transmitting unit configured to transmit, to a peer device, an RLC service data unit (RLC SDU) or an RLC service data unit segment (RLC SDU segment) in an acknowledged mode (AM); and
a second transmitting unit configured to retransmit the RLC service data unit or the RLC service data unit segment N times, before receiving an RLC status protocol data unit (RLC STATUS PDU) from the peer device.

According to another aspect of the embodiments of the present disclosure, there is provided an apparatus of transmitting and receiving data, applied to/configured in a peer device of a terminal equipment, including:
a third receiving unit configured to receive an RLC service data unit (RLC SDU) or an RLC service data unit segment (RLC SDU segment) in an acknowledged mode (AM) transmitted by the terminal equipment; and
a fourth receiving unit configured to receive N times retransmissions of the RLC service data unit or the RLC service data unit segment from the terminal equipment, before transmitting an RLC status protocol data unit (RLC STATUS PDU) to the terminal equipment.

According to another aspect of the embodiments of the present disclosure, there is provided an apparatus of transmitting and receiving data, applied to/configured in a network device, including:
a fifth transmitting unit configured to transmit, to a terminal equipment, configuration information for configuring an RLC retransmission enhancement.

According to another aspect of the embodiments of the present disclosure, there is provided a method of transmitting and receiving data, applied to a terminal equipment, including:
transmitting, to a peer device, an RLC service data unit (RLC SDU) or an RLC service data unit segment (RLC SDU segment) in an acknowledged mode (AM); and
retransmitting the RLC service data unit or the RLC service data unit segment N times, before receiving an RLC status protocol data unit (RLC STATUS PDU) from the peer device.

According to another aspect of the embodiments of the present disclosure, there is provided a method of transmitting and receiving data, applied to a peer device of a terminal equipment, including:
receiving an RLC service data unit (RLC SDU) or an RLC service data unit segment (RLC SDU segment) in an acknowledged mode (AM) transmitted by the terminal equipment; and
receiving N times retransmissions of the RLC service data unit or the RLC service data unit segment from the terminal equipment, before transmitting an RLC status protocol data unit (RLC STATUS PDU) to the terminal equipment.

According to another aspect of the embodiments of the present disclosure, there is provided a method of transmitting and receiving data, applied to a network device, including:
transmitting, to a terminal equipment, configuration information for configuring an RLC retransmission enhancement.

According to another aspect of the embodiments of the present disclosure, there is provided a terminal equipment, including a memory configured to store a computer program and a processor configured to execute the computer program, in order to implement the method of transmitting and receiving data at the terminal equipment side.

According to another aspect of the embodiments of the present disclosure, there is provided a terminal equipment, including: a memory configured to store a computer program and a processor configured to execute the computer program, in order to implement the method of transmitting and receiving data at a peer device side of the terminal equipment.

According to another aspect of the embodiments of the present disclosure, there is provided a network device, including: a memory configured to store a computer program and a processor configured to execute the computer program, in order to implement the method of transmitting and receiving data at a peer device side of the terminal equipment.

According to another aspect of the embodiments of the present disclosure, there is provided a network device, including: a memory configured to store a computer program and a processor configured to execute the computer program, in order to implement the method of transmitting and receiving data at the network device side.

According to another aspect of the embodiments of the present disclosure, there is provided a communication system, including:
a first terminal equipment configured to implement the method of transmitting and receiving data at the terminal equipment side;
a second terminal equipment configured to implement the method of transmitting and receiving data at a peer device side of the terminal equipment; and
a network device configured to implement the method of transmitting and receiving data at the peer device side of the terminal equipment, or the method of transmitting and receiving data at the network device side.

Advantageous effects of the embodiments of the present disclosure include:
After transmitting, to a peer device, an RLC service data unit or an RLC service data unit segment, a terminal equipment first retransmits the RLC service data unit or the RLC service data unit segment N times while waiting to receive an RLC status protocol data unit from the peer device. Therefore, the number of RLC retransmissions is able to be increased within a packet delay budget, transmission reliability of an RLC layer is improved and impact on new transmission is avoided.

With reference to the following description and drawings, particular embodiments of the present disclosure are disclosed in detail, and the manners in which the principle of the present disclosure may be used are indicated. It should be understood that the scope of the embodiments of the present disclosure is not limited thereto. The embodiments of the present disclosure contain a plurality of alternations, amendments and equivalents within the spirit and the scope of the terms of the appended claims.

Features that are described and/or illustrated with respect to one embodiment may be used in a same way or in a similar way in one or more other embodiments, in combination with or instead of the features of the other embodiments.

It should be emphasized that the term "comprise/comprising/including/include" when used herein refers to the presence of features, integers, steps or components, but does not preclude the presence or addition of one or more other features, integers, steps or components.

### Brief Description of the Drawings

Elements and features depicted in one drawing or embodiment of the present disclosure may be combined with elements and features depicted in one or more additional drawings or embodiments. Moreover, in the drawings, similar reference numerals designate corresponding parts throughout multiple drawings and may be used to designate like or similar parts in more than one embodiment.

The drawings are included to provide a further understanding of embodiments of the present disclosure, form a portion of the specification, and are used to illustrate the embodiments of the present disclosure, and demonstrate the principles of the present disclosure together with the literal description. Obviously, the drawings described below are only some embodiments of the present disclosure. Other drawings may also be obtained for those skilled in the art without creative effort, according to these drawings.
FIG. 1 is a schematic diagram illustrating a communication system according to the embodiments of the present disclosure;
FIG. 2 is a schematic diagram illustrating a method of transmitting and receiving data according to the embodiments of the present disclosure;
FIG. 3 is a schematic diagram illustrating that N times retransmissions are located in continuous slots or symbols according to the embodiments of the present disclosure;
FIG. 4 is a schematic diagram illustrating that N times retransmissions are located in discontinuous slots or symbols according to the embodiments of the present disclosure;
FIG. 5 is a schematic diagram illustrating that M times retransmissions are located in continuous slots or symbols according to the embodiments of the present disclosure;
FIG. 6 is a schematic diagram illustrating that M times retransmissions are located in discontinuous slots or symbols according to the embodiments of the present disclosure;
FIG. 7 is another schematic diagram illustrating the method of transmitting and receiving data according to the embodiments of the present disclosure;
FIG. 8 is another schematic diagram illustrating the method of transmitting and receiving data according to the embodiments of the present disclosure;
FIG. 9 is another schematic diagram illustrating the method of transmitting and receiving data according to the embodiments of the present disclosure;
FIG. 10 is a schematic diagram illustrating an apparatus of transmitting and receiving data according to the embodiments of the present disclosure;
FIG. 11 is another schematic diagram illustrating the apparatus of transmitting and receiving data according to the embodiments of the present disclosure;
FIG. 12 is another schematic diagram illustrating the apparatus of transmitting and receiving data according to the embodiments of the present disclosure;
FIG. 13 is another schematic diagram illustrating the apparatus of transmitting and receiving data according to the embodiments of the present disclosure;
FIG. 14 is a schematic diagram illustrating a composition of a terminal equipment according to the embodiments of the present disclosure; and
FIG. 15 is a schematic diagram illustrating a composition of a network device according to the embodiments of the present disclosure.

### Detailed Description

The above and other features of the present disclosure will be apparent with reference to the following description and drawings. In the description and drawings, particular embodiments of the present disclosure have been disclosed in detail as being indicative of some of the embodiments in which the principles of the present disclosure may be employed, however, it should be understood that the present disclosure is not limited to the embodiments described herein. Rather, the present disclosure includes all amendments, variants and equivalents falling within the scope of the appended claims. Various embodiments of the present disclosure will be described below with reference to the drawings. These embodiments are merely illustrative and are not intended to limit the present disclosure.

In embodiments of the present disclosure, terms "first", "second", etc. are used to differentiate different elements with respect to names, and do not indicate spatial arrangement or temporal orders of these elements, and these elements should not be limited by these terms. Terms "and/or" include any one and all combinations of one or more relevantly listed terms. Terms "comprising", "including", "having" refer to presence of stated features, elements, components, or assemblies, but do not exclude presence or addition of one or more other features, elements, components, or assemblies.

In embodiments of the present disclosure, singular forms "a", "the", etc., include plural forms, and should be understood as "a kind of" or "a type of" in a broad sense, but should not be limited to a meaning of "one"; and the term "the" should be understood as including both a singular form and a plural form, except clearly specified otherwise. Furthermore, the term "according to" should be understood as "at least partially according to......", the term "based on" should be understood as "at least partially based on......", except clearly specified otherwise.

In embodiments of the present disclosure, the term "communication network" or "wireless communication network" may refer to a network satisfying any one of communication standards, such as Long Term Evolution (LTE), Long Term Evolution-Advanced (LTE-A), Wideband Code Division Multiple Access (WCDMA), and High-Speed Packet Access (HSPA), etc.

Furthermore, communication between devices in a communication system may be performed according to communication protocols at any stage, which may, for example, include but not limited to the communication protocols: 1G (generation), 2G, 2.5G, 2.75G, 3G, 4G, 4.5G, and 5G in the future, New Radio (NR), etc., and/or other communication protocols that are currently known or will be developed in the future.

In embodiments of the present disclosure, the term "network device", for example, refers to a device in a communication system that accesses a terminal equipment to a communication network and provides services for the terminal equipment. The network device may include but not limited to devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, the base station may include a remote radio head (RRH), a remote radio unit (RRU), a relay, or a low-power node (such as a femto, and a pico, etc.). And the term "base station" may include some or all of its functions, and each base station may provide communication coverage for a specific geographic area. And a term "cell" may refer to a base station and/or its coverage area, depending on a context in which the term is used.

In embodiments of the present disclosure, the term "user equipment" (UE) or "terminal equipment" (TE) refers to, for example, an equipment accessing to a communication network and receiving network services via a network device. The terminal equipment may be fixed or mobile, and may also be referred to as a mobile station (MS), a terminal, a subscriber station (SS), an access terminal (AT), a station, etc.

The terminal equipment may include but not limited to devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, the terminal equipment may include but not limited to a machine-type communication (MTC) terminal, a vehicle mounted communication terminal, a device to device (D2D) terminal, and a machine to machine (M2M) terminal, a terminal supporting sidelink communication, etc.

Moreover, the term "network side" or "network device side" refers to a side of a network, which may be a base station or include one or more network devices described above. The term "user side" or "terminal side" or "terminal equipment side" refers to a side of a user or a terminal, which may be a UE, or may include one or more terminal equipments described above. "A device" in this text may refer to a network device, and may also refer to a terminal equipment, except otherwise specified.

In the present disclosure, an RLC layer may also be referred to as an RLC entity or a transmitting side of an RLC entity or a receiving side of an RLC entity, and an RLC bearer may also be replaced with an RLC entity or an RLC channel.

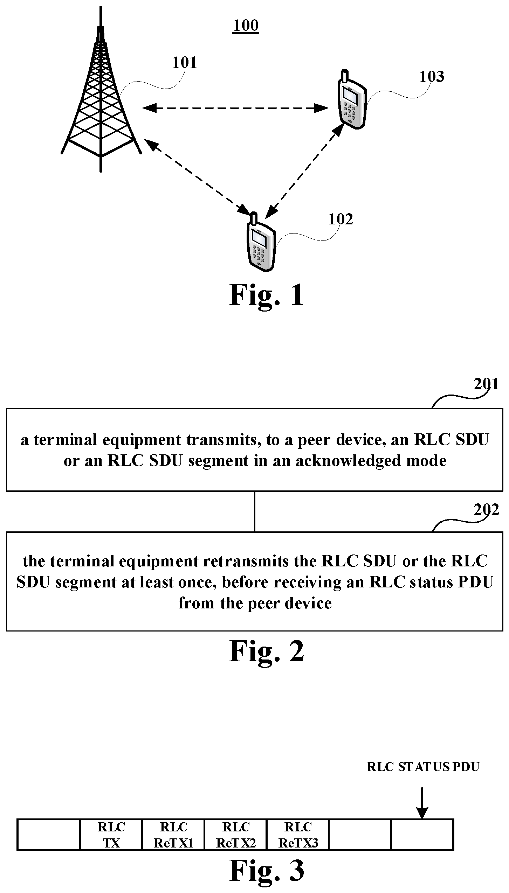

FIG. 1 is a schematic diagram illustrating a communication system according to the embodiments of the present disclosure, which schematically illustrates a situation in which a terminal equipment and a network device are used as an example. As illustrated in the FIG. 1, a communication system 100 may include a network device 101 and terminal equipments 102 and 103. For the sake of simplicity, the FIG. 1 only illustrates two terminal equipments and one network device as an example, however, the embodiments of the present disclosure are not limited thereto.

In embodiments of the present disclosure, existing services or services that may be implemented in the future may be transmitted between the network device 101 and the first terminal equipment 102, and the second terminal 103. For example, these services may include but are not limited to: an enhanced Mobile Broadband (eMBB), a massive Machine Type Communication (mMTC), and an Ultra-Reliable and Low Latency Communication (URLLC), and a related communication of a terminal equipment with reduced capabilities, etc.

It should be noted that the FIG. 1 illustrates that both the first terminal equipment 102 and the second terminal equipment 103 fall within coverage of the network device 101, however, the present disclosure is not limited thereto. Both the first terminal equipment 102 and the second terminal equipment 103 may not fall within the coverage of the network device 101, or one of the first terminal equipment 102 and the second terminal equipment 103 falls within the coverage of the network device 101 and the other of the first terminal equipment 102 and the second terminal equipment 103 falls out of the coverage of the network device 101.

In embodiments of the present disclosure, services may be transmitted between a terminal equipment and a peer device. Taking the terminal equipment as the first terminal equipment 102 in the FIG. 1 as an example, the peer device of the present disclosure may be the network device 101 and/or the second terminal equipment 103 in the FIG. 1. In an actual application, the peer device may also be other network device or terminal equipment. The embodiments of the present disclosure are not limited thereto.

3GPP agrees to specify a user plane enhancement in Release 19, including an enhancement related to an RLC retransmission for an operation of an RLC acknowledged mode (AM) with a small packet delay budget (PDB). One of operational objectives is shown in Table 1 below:

**Table 1**

| | |
|---|---|
| • Specify the following user plane enhancements [RAN2] | |
| | ∘ RLC re-transmission related enhancements for operation of RLC Acknowledged Mode (AM) with small packet delay budget. |

However, there is no definite solution for details about RLC retransmission related enhancements, such as the number of retransmissions, retransmission occasions, an operation after receiving an RLC status PDU, and configuration of RLC retransmission enhancements. This may lead to the following problems for an XR service with a small packet delay budget (PDB) and transmitted in an RLC acknowledged mode (AM):
1) Retransmission at an RLC layer is triggered by receiving a status report from a peer device. However, the status report may not be received by an RLC transmitting side immediately, which may result in failure to complete transmission of the XR service within the packet delay budget.
2) The RLC transmitting side may not abandon retransmissions. When a maximum number of RLC retransmissions is reached, the RLC layer notifies an upper layer, which triggers a radio link failure (RLF). If the maximum number of RLC retransmissions is set to a small value due to a small PDB, the RLF is easy to be triggered since the maximum number of RLC retransmissions is reached, which in turn leads to a failure in XR service transmission not caused by a decline in radio link quality.
3) The retransmission at the RLC layer consumes radio resources, blocks new transmissions, and consequently affects transmission of other service data.

Therefore, details about RLC retransmission related enhancements, such as the number of retransmissions, retransmission occasions, an operation after receiving the RLC status PDU, and configuration of the RLC retransmission enhancements, need to be further discussed.

In view of at least one of the above problems, embodiments of the present disclosure provide a method of transmitting and receiving data, apparatus, and a communication system.

### Embodiments of a First Aspect

Embodiments of the present disclosure provide a method of transmitting and receiving data described from a terminal equipment side.

FIG. 2 is a schematic diagram illustrating a method of transmitting and receiving data according to the embodiments of the present disclosure. The method is applied to a terminal equipment. As illustrated in the FIG. 2, the method includes:
201: a terminal equipment transmits, to a peer device, an RLC service data unit (RLC SDU) or an RLC service data unit segment (RLC SDU segment) in an acknowledged mode (AM); and
202: the terminal equipment retransmits the RLC service data unit or the RLC service data unit segment at least once, before receiving an RLC status protocol data unit (RLC STATUS PDU) from the peer device.

According to the above embodiments, after transmitting, to a peer device, an RLC service data unit or an RLC service data unit segment, a terminal equipment first retransmits the RLC service data unit or the RLC service data unit segment at least once (such as N times) while waiting to receive an RLC status protocol data unit from the peer device. Therefore, the number of RLC retransmissions is able to be increased within a packet delay budget, transmission reliability of an RLC layer is improved and new transmission is avoided from being affected.

It should be noted that the FIG. 2 only schematically illustrates the embodiment of the present disclosure, however, the present disclosure is not limited thereto. For example, an order of execution of operations may be appropriately adjusted, and some other operations may be added, or some operations therein may be removed. And appropriate variants may be made by those skilled in the art according to the above content, without being limited to the disclosure illustrated in the FIG. 2.

In some embodiments, in 201, an RLC service data unit (RLC SDU) or an RLC service data unit segment (RLC SDU segment) transmitted by a terminal equipment to a peer device may be transmitted by an RLC entity of the terminal equipment. Functions of an RLC layer are performed by the RLC entity. For an RLC entity configured at a network device (gNB) side, a peer RLC entity is configured at a UE side, and vice versa. An RLC entity receives an RLC SDU from an upper layer (PDCP layer), or delivers an RLC SDU to an upper layer (PDCP layer), transmits an RLC PDU to its peer RLC entity via a lower layer (MAC layer), or receives an RLC PDU from its peer RLC entity. If receiving the RLC SDU from the upper layer, an RLC entity receives these RLC SDUs through a single RLC channel between the RLC and the upper layer. After an RLC data PDU is formed according to the received RLC SDUs, the RLC entity submits the RLC data PDU to the lower layer through a single logical channel. If receiving a RLC data PDU from the lower layer, the RLC entity receives the RLC data PDU through a single logical channel. After RLC SDUs are formed according to the received RLC data PDU, the RLC entity delivers these RLC SDUs to the upper layer through a single RLC channel between the RLC and the upper layer. An RLC entity may be configured to perform data transfer in one of three modes: a transparent mode (TM), an unacknowledged mode (UM), or an acknowledged mode (AM). An AM RLC entity consists of a transmitting side and a receiving side.

In some embodiments, for an XR service, a network device configures a value of a PDCP discardTimer for a terminal equipment according to a packet delay budget (PDB) of the XR service. In a PDCP layer of the terminal equipment, when the PDCP discardTimer associated with a PDCP SDU expires, the PDCP layer discards the PDCP SDU and indicates an RLC layer to discard an RLC SDU associated with the PDCP SDU. In the RLC layer of the terminal equipment, when an indication to discard an RLC SDU is received from the PDCP layer, if the RLC SDU or segments thereof have not yet been submitted to a lower layer, a transmitting side of an AM RLC entity discards the indicated RLC SDU.

In some embodiments, the peer device includes other terminal equipments different from a terminal equipment transmitting an RLC service data unit, or a network device.

In some embodiments, when an RLC acknowledged mode is used, after a terminal equipment transmits, to a peer device, an RLC service data unit (RLC SDU) or an RLC service data unit segment (RLC SDU segment), the peer device feeds an RLC status protocol data unit (RLC STATUS PDU) back to the terminal equipment. The RLC STATUS PDU includes relevant information of feedback on the RLC SDU or the RLC SDU segment, and the relevant information is acknowledgment (ACK) information or negative acknowledgment (NACK) information. The ACK indicates that the peer device has successfully received the RLC SDU or the RLC SDU segment; the NACK indicates that the peer device has not received or has not completely received the RLC SDU or the RLC SDU segment. In this case, the terminal equipment may perform RLC retransmissions on the RLC SDU or the RLC SDU segment in a case where retransmission requirements are met. A case where the retransmission requirements are met is, for example, that a maximum number of RLC retransmissions is not reached and/or a delay does not exceed a packet delay budget (PDB) corresponding to the RLC SDU or the RLC SDU segment.

In some embodiments, in 202, before receiving an RLC status protocol data unit (RLC STATUS PDU) from the peer device, the terminal equipment performs RLC retransmissions or repetitions of the RLC service data unit or the RLC service data unit segment at least once (such as N times). Thus, while waiting for an RLC status protocol data unit (RLC STATUS PDU) of the peer device, the terminal equipment first autonomously performs N times retransmissions, which is able to fully utilize time between transmission of the RLC SDU or the RLC SDU segment and reception of the RLC STATUS PDU, increase the number of RLC retransmissions, and improve the transmission reliability of the RLC layer.

In some embodiments, a value of the N is a positive integer configured by a network or predefined by a terminal equipment. For example, a network configures the value of the N via an RRC message and/or downlink control information (DCI) and/or a medium access control control element (MAC CE).

In some embodiments, the N times retransmissions are recorded in a retransmission counter (such as RETX_COUNT) associated with the RLC service data unit (RLC SDU) or the RLC service data unit segment (RLC SDU segment). The retransmission counter is set by an RLC layer. If an RLC SDU or an RLC SDU segment is deemed to be retransmitted for a first time, the retransmission counter associated with the RLC SDU is set to 0. For example, if an RLC SDU or an RLC SDU segment deemed to be retransmitted is not waiting for retransmission and the retransmission counter associated with the RLC SDU has not been increased due to another NACK in a same RLC STATUS PDU, the retransmission counter is increased. When the value of the retransmission counter reaches the maximum number of RLC retransmissions, the RLC layer indicates the upper layer (RRC layer) that the maximum number of retransmissions has been reached, and the RRC layer deems that a radio link failure (RLF) has been detected.

In some embodiments, the N times retransmissions are recorded as one time in the retransmission counter. That is, after transmitting, to a peer device, an RLC service data unit (RLC SDU) or an RLC service data unit segment (RLC SDU segment) in an acknowledged mode, before receiving an RLC status protocol data unit (RLC STATUS PDU) from the peer device, a terminal equipment performs N times RLC retransmissions, however, in the retransmission counter, these N times retransmissions are regarded as one retransmission, that is, the retransmission counter is increased by 1, so as to avoid the recorded number of RLC retransmissions from reaching the maximum number of RLC retransmissions prematurely and triggering a radio link failure, and affecting reliable transmission of XR data of the XR service.

In some embodiments, the N times retransmissions are recorded as N times in the retransmission counter. That is, after transmitting, to a peer device, an RLC service data unit (RLC SDU) or an RLC service data unit segment (RLC SDU segment) in an acknowledged mode, before receiving an RLC status protocol data unit (RLC STATUS PDU) from the peer device, a terminal equipment performs N times RLC retransmissions, and these N times retransmissions are all recorded in the retransmission counter, that is, the retransmission counter is increased by N. Accordingly, the maximum number of RLC retransmissions needs to be a large value, so as to avoid the recorded number of RLC retransmissions from reaching the maximum number of RLC retransmissions prematurely and triggering a radio link failure, and affecting reliable transmission of XR data of the XR service.

In some embodiments, when N times retransmissions are recorded in a retransmission counter associated with the RLC service data unit or the RLC service data unit segment, the maximum number of RLC retransmissions is greater than the number of RLC retransmissions recorded in the retransmission counter for the N times retransmissions. For example, when N times retransmissions are recorded as one time in the retransmission counter, the maximum number of RLC retransmissions should be greater than 1; for another example, when N times retransmissions are recorded as N times in the retransmission counter, the maximum number of RLC retransmissions should be greater than N. Therefore, triggering a radio link failure due to that the maximum number of RLC retransmissions is reached after the N times retransmissions is avoided.

In some embodiments, the maximum number of RLC retransmissions is greater than the maximum number of RLC retransmissions in the relevant art, for example, in a case where the N times retransmissions are recorded in a retransmission counter associated with the RLC service data unit or the RLC service data unit segment. The maximum number of RLC retransmissions in the relevant art is at most 32, while the maximum number of RLC retransmissions in this solution may be 64 or more, therefore, triggering a radio link failure due to that the number of retransmissions reaches the maximum number of RLC retransmissions when the N times retransmissions are recorded in the retransmission counter may be avoided.

In some embodiments, the N times retransmissions are not recorded in a retransmission counter associated with the RLC service data unit (RLC SDU) or the RLC service data unit segment (RLC SDU segment). Thus, the N times retransmissions performed before the RLC status protocol data unit (RLC STATUS PDU) is received from the peer device do not result in a change in the value of the retransmission counter, so as not to occupy an opportunity for RLC retransmissions and not to set the maximum number of RLC retransmissions to be a large value, so as to avoid the number of RLC retransmissions from reaching the maximum number of RLC retransmissions prematurely and triggering a radio link failure, therefore, reliability of XR data transmission of the XR service is improved.

In some embodiments, the N times retransmissions are located in continuous slots or symbols. For example, FIG. 3 is a schematic diagram illustrating that N times retransmissions are located in continuous slots or symbols according to the embodiments of the present disclosure. As illustrated in the FIG. 3, a terminal equipment transmits, to a peer device, at least one RLC SDU or RLC SDU segment in an acknowledged mode, i.e., an RLC TX in the FIG. 3. Assuming that a value of N is 3, before receiving an RLC STATUS PDU from a peer device, a terminal equipment performs three RLC retransmissions on the RLC SDU or the RLC SDU segment in three continuous slots or symbols after an RLC TX, i.e., continuous RLC ReTX1, RLC ReTX2, and RLC ReTX3 in the FIG. 3.

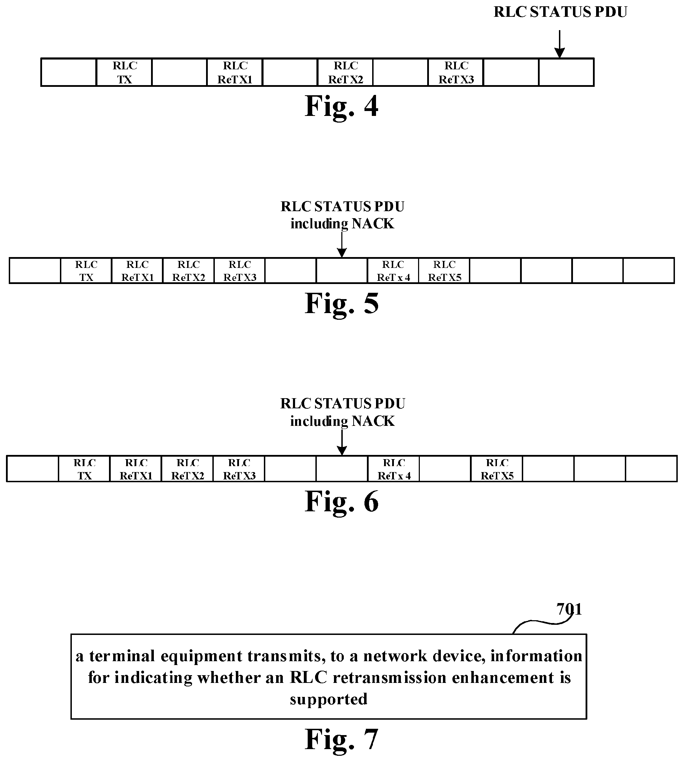

In some embodiments, the N times retransmissions are located in discontinuous slots or symbols. For example, FIG. 4 is a schematic diagram illustrating that N times retransmissions are located in discontinuous slots or symbols according to the embodiments of the present disclosure. As illustrated in the FIG. 4, a terminal equipment transmits, to a peer device, an RLC SDU or an RLC SDU segment in an acknowledged mode, i.e., an RLC TX in the FIG. 4. Assuming that a value of N is 3, before receiving an RLC STATUS PDU from a peer device, a terminal equipment performs three RLC retransmissions on the RLC SDU or the RLC SDU segment in three discontinuous slots or symbols after an RLC TX, i.e., discontinuous RLC ReTX1, RLC ReTX2, and RLC ReTX3 in the FIG. 4.

In some embodiments, the N times retransmissions are located in discontinuous slots or symbols, including cases where the N times retransmissions are all located in discontinuous slots or symbols, or part of the N times retransmissions is continuous. For example, in the FIG. 3, RLC ReTX1 and RLC ReTX2 are continuous, while RLC ReTX2 and RLC ReTX3 are discontinuous.

In some embodiments, whether N times retransmissions are located in continuous slots or symbols and when the N times retransmissions are located in discontinuous slots or symbols, an interval of the discontinuous slots or symbols may be determined in a plurality of ways, for example, configured by a network device, that is, the network device configures N times retransmissions located in continuous slots or symbols, or the network device configures N times retransmissions located in discontinuous slots or symbols and configures an interval of the discontinuous slots or symbols; for another example, pre-defined by a terminal equipment, that is, the terminal equipment pre-defines the N times retransmissions located in the continuous slots or symbols, or the terminal equipment pre-defines the N times retransmissions located in the discontinuous slots or symbols and an interval of the discontinuous slots or symbols; for another example, determined according to a position of an uplink grant (UL grant) configured or scheduled by a network device, such as a configured uplink grant or an uplink grant scheduled by DCI, for example, when positions of the uplink grant configured or scheduled by the network device are continuous, the N times retransmissions are located in the continuous slots or symbols; when positions of the uplink grant configured or scheduled by the network device are discontinuous, the N times retransmissions are located in the discontinuous slots or symbols, and the interval of the discontinuous slots or symbols is determined according to an interval of positions of the discontinuous uplink grant configured or scheduled by the network device.

In some embodiments, an interval of the discontinuous slots or symbols includes the number of slots or the number of symbols.

In some embodiments, intervals between slots or symbols of two adjacent retransmissions in N times retransmissions may be the same or different. For example, as illustrated in the FIGs. 3 and 4, an interval between RLC ReTX1 and RLC ReTX2 may be the same as or different from an interval between RLC ReTX2 and RLC ReTX3.

In some embodiments, slots or symbols of two adjacent retransmissions in N times retransmissions may be partially continuous. For example, as illustrated in the FIGs. 3 and 4, RLC ReTX1 and RLC ReTX2 may be located in continuous slots or symbols, while RLC ReTX2 and RLC ReTX3 may be separated by one slot or symbol.

In some embodiments, the method further includes:
a terminal equipment receives an RLC status protocol data unit transmitted by the peer device; and
the terminal equipment performs an operation related to an RLC retransmission according to the received RLC status protocol data unit.

In some embodiments, an RLC status protocol data unit received by a terminal equipment includes a NACK for the RLC SDU or the RLC SDU segment. In this case, the terminal equipment performs an operation related to an RLC retransmission according to the received RLC status protocol data unit includes:
The terminal equipment performs M times retransmissions of the RLC service data unit or the RLC service data unit segment.

In some embodiments, a value of the M is a positive integer configured by a network or predefined by a terminal equipment. For example, a network configures or notifies a value of the M via an RRC message and/or downlink control information (DCI) and/or a medium access control control element (MAC CE).

In some embodiments, the M times retransmissions are recorded in a retransmission counter associated with the RLC service data unit (RLC SDU) or the RLC service data unit segment (RLC SDU segment). Reference may be made to the above embodiments for the retransmission counter, which will not be described herein again.

In some embodiments, the M times retransmissions are recorded as one time in the retransmission counter. That is, when receiving a NACK for the RLC SDU or the RLC SDU segment from the peer device, a terminal equipment performs M times RLC retransmissions on the RLC SDU or the RLC SDU segment, but records these M times retransmissions as one retransmission in a retransmission counter, so as to avoid the recorded number of RLC retransmissions from reaching the maximum number of RLC retransmissions prematurely and triggering a radio link failure, and affecting reliable transmission of XR data of the XR service.

In some embodiments, the M times retransmissions are recorded as M times in the retransmission counter. That is, when receiving a NACK for the RLC SDU or the RLC SDU segment from the peer device, a terminal equipment performs M times RLC retransmissions on the RLC SDU or the RLC SDU segment, and records all of the M times retransmissions in the retransmission counter. Accordingly, the maximum number of RLC retransmissions may be set to a large value, so as to avoid the recorded number of RLC retransmissions from reaching the maximum number of RLC retransmissions prematurely and triggering a radio link failure, and affecting reliable transmission of XR data of the XR service.

In some embodiments, when M times retransmissions are recorded in a retransmission counter associated with the RLC service data unit or the RLC service data unit segment, a maximum number of RLC retransmissions is greater than or equal to a sum of the number of RLC retransmissions recorded in the retransmission counter for the M times retransmissions and the number of RLC retransmissions recorded in the retransmission counter for the N times retransmissions. For example, when the M times retransmissions are recorded as one time in the retransmission counter and the N times retransmissions are recorded as one time in the retransmission counter, the maximum number of RLC retransmissions should be greater than or equal to 2. For another example, when the M times retransmissions are recorded as M times in the retransmission counter and the N times retransmissions are recorded as one time in the retransmission counter, the maximum number of RLC retransmissions should be greater than or equal to M+1. When the N times retransmissions are recorded as N times in the retransmission counter, a value of the maximum number of RLC retransmissions is determined in a similar manner, so as to avoid reaching the maximum number of RLC retransmissions prematurely and triggering a radio link failure.

In some embodiments, the M times retransmissions are located in continuous slots or symbols. For example, FIG. 5 is a schematic diagram illustrating that M times retransmissions are located in continuous slots or symbols according to the embodiments of the present disclosure. As illustrated in the FIG. 5, a terminal equipment transmits, to a peer device, an RLC SDU or an RLC SDU segment in an acknowledged mode, i.e., an RLC TX in the FIG. 5, and before receiving an RLC status protocol data unit from the peer device including a NACK for the RLC SDU or the RLC SDU segment, i.e., "RLC STATUS PDU including NACK" in the FIG. 5, the terminal equipment performs N=3 RLC retransmissions on the RLC SDU or the RLC SDU segment. After receiving the "RLC STATUS PDU including NACK", the terminal equipment performs M=2 RLC retransmissions on the RLC SDU or the RLC SDU segment in two continuous slots or symbols, i.e., continuous RLC ReTX4 and RLC ReTX5 in the FIG. 5.

In some embodiments, the M times retransmissions are located in discontinuous slots or symbols. For example, FIG. 6 is a schematic diagram illustrating that M times retransmissions are located in discontinuous slots or symbols according to the embodiments of the present disclosure. As illustrated in the FIG. 6, a terminal equipment transmits, to a peer device, an RLC SDU or an RLC SDU segment in an acknowledged mode, i.e., an RLC TX in the FIG. 6; and before receiving an RLC status protocol data unit including a NACK for the RLC SDU or the RLC SDU segment from the peer device, i.e., "RLC STATUS PDU including NACK" in the FIG. 6, the terminal equipment performs N=3 RLC retransmissions on the RLC SDU or the RLC SDU segment. After receiving the "RLC STATUS PDU including NACK", the terminal equipment performs M=2 RLC retransmissions on the RLC SDU or the RLC SDU segment in 2 discontinuous slots or symbols, i.e., discontinuous RLC ReTX4 and RLC ReTX5 in the FIG. 6.

In some embodiments, whether M times retransmissions are located in continuous slots or symbols, and when the M times retransmissions are located in discontinuous slots or symbols, an interval of the discontinuous slots or symbols may be determined in a plurality of ways, for example, configured by a network device, that is, the network device configures M times retransmissions located in continuous slots or symbols, or the network device configures M times retransmissions located in discontinuous slots or symbols and configures an interval of the discontinuous slots or symbols; for another example, pre-defined by a terminal equipment, that is, the terminal equipment pre-defines M times retransmissions located in continuous slots or symbols, or the terminal equipment pre-defines M times retransmissions located in discontinuous slots or symbols and an interval of the discontinuous slots or symbols; for another example, determined according to a position of an uplink (UL) grant configured or scheduled by a network device, for example, when positions of the uplink grant configured or scheduled by the network device are continuous, the M times retransmissions are located in continuous slots or symbols; when positions of the uplink grant configured or scheduled by the network device are discontinuous, the M times retransmissions are located in the discontinuous slots or symbols, and the interval of the discontinuous slots or symbols is determined according to an interval of positions of the discontinuous uplink grant configured or scheduled by the network device.

In some embodiments, the interval of the discontinuous slots or symbols includes the number of slots or the number of symbols.

In some embodiments, when a value of M is greater than 2, intervals between slots or symbols of two adjacent retransmissions in M times retransmissions may be the same or different. For example, taking M=3 as an example, assuming that M times retransmissions are represented as RLC ReTX4, RLC ReTX5, and RLC ReTX6, respectively, an interval between RLC ReTX4 and RLC ReTX5 may be the same as or different from an interval between RLC ReTX5 and RLC ReTX6.

In some embodiments, when a value of M is greater than 2, slots or symbols of two adjacent retransmissions in M times retransmissions may be partially continuous. For example, taking M=3 as an example, assuming that M times retransmissions are represented as RLC ReTX4, RLC ReTX5, and RLC ReTX6, respectively, RLC ReTX4 and RLC ReTX5 may be located in continuous slots or symbols, and RLC ReTX5 and RLC ReTX6 are separated by one slot or symbol.

In some embodiments, a value of the M and a value of N may be the same or different.

In some embodiments, the N times retransmissions and the M times retransmissions are both located in continuous slots or symbols, or are both located in discontinuous slots or symbols, or one of the N times retransmissions and the M times retransmissions is located in a continuous slot or symbol and the other is located in a discontinuous slot or symbol, which is not limited in the present disclosure.

In some embodiments, the method further includes:
a terminal equipment receives an RLC status protocol data unit transmitted by the peer device after M times retransmissions, the RLC status protocol data unit including a NACK for the RLC SDU or the RLC SDU segment; and
the terminal equipment retransmits the RLC service data unit or the RLC service data unit segment L times.

Therefore, when a NACK is received from a peer device after M times retransmissions, L retransmissions may be performed autonomously. A value of the L may be the same as M or N, or different from M and N.

In some embodiments, an RLC status protocol data unit received by a terminal equipment includes an ACK for the RLC SDU or the RLC SDU segment. In this case, the terminal equipment performs an operation related to an RLC retransmission according to a received RLC status protocol data unit, includes:
the terminal equipment stops an RLC retransmission of the RLC SDU or the RLC SDU segment, and/or transmits an indication of successful delivery of the RLC SDU to an upper layer (such as a PDCP layer).

After an ACK for the RLC SDU or the RLC SDU segment is received from a peer device, it indicates that the peer device has correctly received the RLC SDU or the RLC SDU segment, therefore, retransmission of the RLC SDU or the RLC SDU segment is not required.

In some embodiments, an operation related to an RLC retransmission is performed according to a received RLC status protocol data unit, regardless of whether N times RLC retransmissions are completed before a terminal equipment receives an RLC status protocol data unit transmitted by the peer device. For example, when receiving an RLC status protocol data unit transmitted by the peer device, a terminal equipment has already performed n times RLC retransmissions, where n is a positive integer less than or equal to N. In this case, the terminal equipment may perform an operation related to an RLC retransmission according to a received RLC status protocol data unit without considering whether all N times retransmissions are completed.

In some embodiments, when receiving an RLC status protocol data unit (RLC STATUS PDU) from the peer device, a terminal equipment performs n times RLC retransmissions, where n is a positive integer less than N. If the RLC status protocol data unit includes acknowledgment (ACK) information for the RLC SDU or the RLC SDU segment, RLC retransmissions are stopped. That is, if an ACK for the RLC SDU or the RLC SDU segment is received from a peer device, even if the number of retransmissions has not reached N, the RLC retransmissions are not continued.

In some embodiments, when receiving an RLC status protocol data unit (RLC STATUS PDU) from the peer device, a terminal equipment performs n times RLC retransmissions, where n is a positive integer less than N. If the RLC status protocol data unit includes negative acknowledgment (NACK) information for the RLC SDU or the RLC SDU segment, an operation related to an RLC retransmission is performed after the NACK is received, e.g., "retransmitting the RLC service data unit or the RLC service data unit segment M times" in the above embodiments is performed. That is, if a NACK for the RLC SDU or the RLC SDU segment is received from a peer device, even if the number of retransmissions has not reached N, remaining (N-n) RLC retransmissions are not continued, but a new retransmission process proceeds.

In some embodiments, after performing N times retransmissions, a terminal equipment does not receive an RLC status protocol data unit (RLC STATUS PDU) from a peer device. In this case, the terminal equipment may wait for the RLC STATUS PDU from the peer device, or autonomously transmit K RLC retransmissions. A value of the K may be the same as M or N, or different from both M and N.

In some embodiments, after N times retransmissions, when receiving no RLC status protocol data unit (RLC STATUS PDU) from a peer device within preset time, a terminal equipment autonomously transmits K RLC retransmissions. A value of the K may be the same as M or N, or different from both M and N.

In some embodiments, the preset time is configured by a network device or predefined by a terminal equipment.

In the above embodiments, the method of transmitting and receiving data in the present disclosure describes enhancement details related to an RLC retransmission, such as the number of retransmissions, retransmission occasions, and an operation after receiving an RLC status PDU, which helps reliably transmitting XR data to a peer device within a packet delay budget (PDB) of an XR service, and is easily implemented.

In some embodiments, the method further includes:
a terminal equipment receives configuration information for configuring an RLC retransmission enhancement transmitted by a network device.

The configuration information is used to configure the number of retransmissions related to RLC retransmissions, retransmission occasions, an operation after receiving an RLC status PDU, etc.

In some embodiments, the configuration information may be related to or configured with at least one of following:
the terminal equipment;
a data radio bearer (DRB) of the terminal equipment;
a data radio bearer of the terminal equipment configured in an RLC acknowledged mode (RLC AM);
an RLC bearer of the terminal equipment; or
an RLC bearer of the terminal equipment configured in an RLC acknowledged mode (RLC AM).

The embodiments describe an object for configuring an RLC retransmission enhancement by a network device, wherein the network device configures an RLC retransmission enhancement for at least one of a terminal equipment itself, a radio bearer of the terminal equipment, a data radio bearer of the terminal equipment configured in an RLC acknowledged mode, an RLC bearer of the terminal equipment, or an RLC bearer of the terminal equipment configured in an RLC acknowledged mode (RLC AM).

In some embodiments, the configuration information includes at least one of the following information:
whether to use an RLC retransmission enhancement;
an initiation condition and/or a termination condition and/or a duration of using an RLC retransmission enhancement;
N and/or M times RLC retransmissions;
whether RLC retransmissions are in continuous slots or symbols;
an RLC retransmission-related timer; or
an interval of RLC retransmissions.

The embodiments describe specific information of configuring an RLC retransmission enhancement by a network device.

In some embodiments, whether an RLC retransmission enhancement is used in the configuration information may be indicated by one bit, and different values of the one bit indicate whether an RLC retransmission enhancement is used or not. For example, a value of the one bit is 1, which indicates that an RLC retransmission enhancement is used, a value of the one bit is 0, which indicates that an RLC retransmission enhancement is not used, and vice versa; or presence of the one bit indicates that an RLC retransmission enhancement is used, and absence of the one bit indicates that an RLC retransmission enhancement is not used, and vice versa.

In some embodiments, an initiation condition of using an RLC retransmission enhancement in the configuration information is, for example, a first moment t1 before a PDCP discardTimer expires, a time difference between the first moment t1 and a moment t3 when the PDCP discardTimer expires is a first time difference T1, or remaining time corresponding to a logical channel group (LCG) is less than T1, and the first time difference T1 is configured by a network or predefined by a terminal equipment.

In some embodiments, a termination condition of using an RLC retransmission enhancement in the configuration information is, for example, a second moment t2 before a PDCP discardTimer expires, or a moment t3 when a PDCP discardTimer expires, or remaining time corresponding to a logical channel group is 0. A time difference between the second moment t2 and the moment t3 when the PDCP discardTimer expires is a second time difference T2, or remaining time corresponding to the logical channel group is less than T2, and the second time difference T2 is configured by a network or predefined by a terminal equipment.

In some embodiments, the second moment t2 is later than the first moment t1.

In some embodiments, a duration of using an RLC retransmission enhancement in the configuration information is, for example, a time difference T3 between a moment when an RLC retransmission enhancement is initiated and a moment when an RLC retransmission enhancement is terminated. After the RLC retransmission enhancement is initiated, the RLC retransmission enhancement is terminated after the duration T3 has elapsed.

In some embodiments, the number N of the RLC retransmissions is the number of the RLC retransmissions performed by a terminal equipment after transmitting, to a peer device, an RLC service data unit (RLC SDU) or an RLC service data unit segment in an acknowledged mode (AM) and before receiving an RLC status protocol data unit (RLC STATUS PDU) from the peer device. The number M of the RLC retransmissions is the number of the RLC retransmissions performed by the terminal equipment after receiving the RLC STATUS PDU for the RLC SDU or the RLC SDU segment from the peer device.

In some embodiments, whether RLC retransmissions are in continuous slots or symbols includes: whether the N times RLC retransmissions are in continuous slots or symbols, and/or whether the M times RLC retransmissions are in continuous slots or symbols.

In some embodiments, an interval of the RLC retransmissions includes the number of slots or symbols between two adjacent retransmissions when the N times RLC retransmissions are in discontinuous slots or symbols, and/or the number of slots or symbols between two adjacent retransmissions when the M times RLC retransmissions are in discontinuous slots or symbols.

In some embodiments, a timer related to the RLC retransmission includes a PDCP discardTimer corresponding to an RLC service data unit (RLC SDU) or an RLC service data unit segment (RLC SDU segment).

In some embodiments, the method further includes:
an RRC layer of the terminal equipment configures an RLC retransmission enhancement to an RLC layer according to the RRC message, or indicates that an RLC layer to use an RLC retransmission enhancement.

Therefore, the RRC layer of the terminal equipment configures the RLC retransmission enhancement to the RLC layer, or indicates the RLC layer to use the RLC retransmission enhancement, according to the configuration information in the RRC message.

In some embodiments, the configuration information further includes configuration of an initial state or default state of an RLC retransmission enhancement. For example, the initial state or default state of the RLC retransmission enhancement includes activation and deactivation. When the initial state or default state of the RLC retransmission enhancement is activated, the terminal equipment uses the RLC retransmission enhancement; when the initial state or default state of the RLC retransmission enhancement is deactivated, the terminal equipment does not use the RLC retransmission enhancement and uses the RLC retransmission enhancement after the RLC retransmission enhancement is activated.

In some embodiments, an initial state or default state of the RLC retransmission enhancement is associated with or is indicated with respect to at least one of following:
a terminal equipment, a radio bearer of the terminal equipment, a data radio bearer of the terminal equipment configured in an RLC acknowledged mode, an RLC bearer of the terminal equipment, or an RLC bearer of the terminal equipment configured in an RLC acknowledged mode (RLC AM).

In some embodiments, different values of the initial state or default state indicate whether the initial state or default state of the RLC retransmission enhancement is activated or deactivated. For example, the initial state or default state is represented by 1 bit, and different values of the 1 bit represent whether the initial state or default state of the RLC retransmission enhancement is activated, or the initial state or default state of the RLC retransmission enhancement is deactivated. For example, a value of the 1 bit is 1, which indicates that the initial state or default state of the RLC retransmission enhancement is activated, and a value of the 1 bit is 0, which indicates that the initial state or default state of the RLC retransmission enhancement is deactivated, and vice versa; or whether the initial state or default state is present indicates whether the initial state or default state of the RLC retransmission enhancement is activated or deactivated. For example, the initial state or default state is represented by 1 bit, presence of the 1 bit represents that the initial state or default state of the RLC retransmission enhancement is activated, and absence of the 1 bit represents that the initial state or default state of the RLC retransmission enhancement is deactivated, and vice versa.

In some embodiments, the initial state or default state is represented by a bitmap, and each bit in the bitmap corresponds to an initial state or default state of an RLC retransmission enhancement of a configured data radio bearer (DRB) of a terminal equipment or a data radio bearer of a terminal equipment configured in an RLC acknowledged mode or an RLC bearer of a terminal equipment or an RLC bearer of a terminal equipment configured in an RLC acknowledged mode (RLC AM). A relationship between a value of a bit in the bitmap and an initial state or default state of an RLC retransmission enhancement of a configured DRB or a DRB in an RLC acknowledged mode or an RLC bearer or an RLC bearer in an RLC acknowledged mode is as described in the above embodiments. For example, a value of a bit in the bitmap is 1, which indicates that an initial state or default state of an RLC retransmission enhancement of a configured DRB or a DRB in an RLC acknowledged mode or an RLC bearer or an RLC bearer in an RLC acknowledged mode is activated, and a value of a bit in the bitmap is 0, which indicates that the initial state or default state of the RLC retransmission enhancement of a configured DRB or a DRB in an RLC acknowledged mode or an RLC bearer or an RLC bearer in an RLC acknowledged mode is deactivated, and vice versa.

In some embodiments, an order of bits corresponding to an initial state or default state of an RLC retransmission enhancement of each configured DRB or DRB in an RLC acknowledged mode or RLC bearer or RLC bearer in an RLC acknowledged mode in the bitmap is arranged in an ascending or descending order according to an identifier of the configured DRB or an identifier of the DRB in the RLC acknowledged mode or an index or identifier of the RLC bearer or an index or identifier of the RLC bearer in the RLC acknowledged mode or an identifier of a logical channel, or the order is configured by a network device.

In some embodiments, an identifier of a DRB or a DRB in an RLC acknowledged mode is, for example, a data radio bearer identifier (DRB ID), an index or identifier of an RLC bearer or an RLC bearer in an RLC acknowledged mode is, for example, an identifier of a logical channel corresponding to an RLC bearer or an RLC bearer identifier (RLC Bearer ID), and an identifier of a logical channel is a logical channel identifier configured by a network.

In some embodiments, the configuration information is carried by RRC signaling, for example, the configuration information is contained in an RRC message such as an RRC reconfiguration message, an RRC resume message, or an RRC re-establishment message.

In some embodiments, the method further includes:
an RRC layer of the terminal equipment indicates an RLC layer to activate or deactivate an RLC retransmission enhancement, according to the RRC message.

Therefore, in a case where configuration information includes configuration of an initial state or default state of an RLC retransmission enhancement, an RRC layer of a terminal equipment indicates an RLC layer to activate or deactivate the RLC retransmission enhancement according to the configuration of the initial state or default state of the RLC retransmission enhancement in the configuration information in the RRC message, and the RLC layer may activate or deactivate the RLC retransmission enhancement (for the indicated RLC bearer or DRB-related RLC bearer).

In some embodiments, the method further includes:
a terminal equipment receives indication information for indicating a state of an RLC retransmission enhancement transmitted by the network device. For example, the state of the RLC retransmission enhancement includes activation and deactivation, and the indication information indicates activation of the RLC retransmission enhancement or deactivation of the RLC retransmission enhancement.

In some embodiments, different states of an RLC retransmission enhancement are indicated by different values of the indication information, for example, the indication information is 1 bit, and different states of an RLC retransmission enhancement are indicated by different values of the 1 bit, for example, the 1 bit value is 1, which indicates that the state of the RLC retransmission enhancement is activated, the 1 bit value is 0, which indicates that the state of the RLC retransmission enhancement is deactivated, and vice versa; or different states of an RLC retransmission enhancement are indicated by presence of the indication information or not, for example, the indication information is 1 bit, presence of the 1 bit indicates that the state of the RLC retransmission enhancement is activated, absence of the 1 bit indicates that the state of the RLC retransmission enhancement is deactivated, and vice versa.

In some embodiments, the indication information is a bitmap, and each bit in the bitmap indicates an state of an RLC retransmission enhancement of a configured data radio bearer (DRB) of a terminal equipment or a configured data radio bearer of a terminal equipment in an RLC acknowledged mode or an RLC bearer of a terminal equipment or a configured RLC bearer of a terminal equipment in an RLC acknowledged mode (RLC AM). A relationship between a value of a bit and a state of an RLC retransmission enhancement of a configured DRB or a DRB in an RLC acknowledged mode or an RLC bearer or an RLC bearer in an RLC acknowledged mode indicated by the bit in the bitmap is as described in the above embodiments. For example, a value of the 1 bit in the bitmap is 1, which indicates that a state of an RLC retransmission enhancement of a configured DRB or a DRB in an RLC acknowledged mode or an RLC bearer or an RLC bearer in an RLC acknowledged mode is activated, and a value of the 1 bit in the bitmap is 0, which indicates that the state of the RLC retransmission enhancement of a configured DRB or a DRB in an RLC acknowledged mode or an RLC bearer or an RLC bearer in an RLC acknowledged mode is deactivated, and vice versa.

In some embodiments, an order of bits corresponding to a state of an RLC retransmission enhancement of each configured DRB or DRB in an RLC acknowledged mode or RLC bearer or RLC bearer in an RLC acknowledged mode in the bitmap is arranged in an ascending or descending order according to an identifier of the configured DRB or an identifier of the DRB in the RLC acknowledged mode or an index or identifier of the RLC bearer or an index or identifier of the RLC bearer in the RLC acknowledged mode or an identifier of a logical channel, or the order is configured by a network device.

In some embodiments, the indication information is carried by downlink control information (DCI) or a medium access control control element (MAC CE) or an RLC control protocol data unit (RLC control PDU) or a PDCP control protocol data unit (PDCP control PDU).

Thus, the RLC retransmission enhancement state of the terminal equipment or the configured radio bearer DRB of the terminal equipment or the data radio bearer of the terminal equipment configured in the RLC acknowledged mode or the RLC bearer of the terminal equipment or the RLC bearer of the terminal equipment configured in the RLC acknowledged mode (RLC AM) is able to be dynamically indicated, therefore, an RLC retransmission enhancement function is more flexibly applied.

In some embodiments, the method further includes:
a physical layer or a MAC layer of the terminal equipment indicates that an RLC layer to activate or deactivate an RLC retransmission enhancement, according to the downlink control information or the medium access control control element.

Therefore, in a case where the indication information is carried by DCI or a MAC CE, the physical layer or the MAC layer of the terminal equipment indicates the RLC layer to activate or deactivate the RLC retransmission enhancement according to the indication information in the DCI or the MAC CE, and the RLC layer may activate or deactivate the RLC retransmission enhancement (for the indicated RLC bearer or DRB-related RLC bearer).

In some embodiments, the method further includes:
an RLC layer of the terminal equipment activates or deactivates an RLC retransmission enhancement, according to the RLC control protocol data unit.

Therefore, in a case where the indication information is carried by an RLC control PDU, an RLC layer of a terminal equipment activates or deactivates an RLC retransmission enhancement, according to the indication information in the RLC control PDU (for the indicated RLC bearer or DRB-related RLC bearer).

In some embodiments, the method further includes:
a PDCP layer of the terminal equipment indicates that an RLC layer to activate or deactivate an RLC retransmission enhancement, according to the PDCP control protocol data unit.

Therefore, in a case where the indication information is carried by the PDCP control PDU, the PDCP layer of the terminal equipment indicates the RLC layer to activate or deactivate the RLC retransmission enhancement according to the indication information in the PDCP control PDU, and the RLC layer may activate or deactivate the RLC retransmission enhancement (for the indicated RLC bearer or DRB-related RLC bearer).

In some embodiments, the indication information is received when a terminal equipment receives configuration information for configuring an RLC retransmission enhancement transmitted by a network device, or the indication information is received when a terminal equipment does not receive configuration information for configuring an RLC retransmission enhancement transmitted by a network device.

In some embodiments, the method further includes:
a terminal equipment determines to use an RLC retransmission enhancement or stop using an RLC retransmission enhancement.

In some embodiments, a terminal equipment determines to use an RLC retransmission enhancement, including: the terminal equipment performs an RLC retransmission enhancement at a first moment before a PDCP discardTimer expires or when remaining time corresponding to at least one LCG is less than a first threshold. For example, a moment when the PDCP discardTimer expires is t3, and when arriving at the first moment t1 before a moment t3, the terminal equipment uses the RLC retransmission enhancement; or when remaining time corresponding to at least one LCG is less than a first threshold Th1, the terminal equipment uses the RLC retransmission enhancement. Therefore, the terminal equipment is able to determine to use the RLC retransmission enhancement automatically without relying on configuration or dynamic indication of the network device.

In some embodiments, a terminal equipment determines to stop using an RLC retransmission enhancement, including: the terminal equipment stops the RLC retransmission enhancement when the PDCP discardTimer expires or at a second moment before the PDCP discardTimer expires or when remaining time corresponding to at least one LCG is less than a second threshold or when remaining time corresponding to at least one LCG is zero. For example, a moment when the PDCP discardTimer expires is t3, and when arriving at the t3 or a second moment t2 before the t3, the terminal equipment stops using the RLC retransmission enhancement; or when remaining time corresponding to at least one LCG is less than a second threshold Th2, the terminal equipment uses the RLC retransmission enhancement. Thus, the terminal equipment is able to determine to stop using the RLC retransmission enhancement on its own without relying on configuration or dynamic indication of the network device.

In some embodiments, the second moment t2 is later than the first moment t1.

In some embodiments, a first time difference T1 between the first moment t1 and a moment t3 when the PDCP discardTimer expires, and/or a second time difference T2 between the second moment t2 and a moment t3 when the PDCP discardTimer expires, and/or a first threshold Th1, and/or a second threshold Th2 are configured by a network device or customized by a terminal equipment.

In some embodiments, the PDCP discardTimer may be a PDCP discardTimer associated with at least one PDCP SDU, for example, a shortest PDCP discardTimer among the PDCP discardTimers associated with buffered PDCP SDUs or a shortest PDCP discardTimer among the PDCP discardTimers associated with PDCP SDUs buffered in an LCG; and remaining time corresponding to an LCG may be a shortest remaining value of the PDCP discardTimer associated with the PDCP SDU buffered in an LCG.

In some embodiments, at least one LCG includes a logical channel group in which a logical channel for transmitting an RLC SDU or an RLC SDU segment (or a corresponding RLC PDU thereof) is located, and the LCG includes an LCG configured by a network device, or an LCG configured by a network device that uses (or supports) an RLC retransmission enhancement, or an LCG predefined by a terminal equipment.

In some embodiments, a PDCP layer of a terminal equipment indicates an RLC layer to perform an RLC retransmission enhancement, or a PDCP layer indicates an RLC layer to stop an RLC retransmission enhancement.

In some embodiments, a PDCP layer of a terminal equipment determines in the above embodiments to indicate an RLC layer to perform an RLC retransmission enhancement or stop an RLC retransmission enhancement.

In some embodiments, a PDCP layer of a terminal equipment indicates an RLC layer to perform an RLC retransmission enhancement on at least one PDCP service data unit (PDCP SDU) and/or PDCP protocol data unit (PDCP PDU) and/or RLC service data unit (RLC SDU) and/or RLC service data unit segment (RLC SDU segment); or a PDCP layer indicates an RLC layer to stop an RLC retransmission enhancement on at least one PDCP service data unit (PDCP SDU) and/or PDCP protocol data unit (PDCP PDU) and/or RLC service data unit (RLC SDU) and/or RLC service data unit segment (RLC SDU segment).

In some embodiments, performing an RLC retransmission enhancement includes: performing an RLC retransmission enhancement on an RLC entity (or DRB) corresponding to at least one configured DRB, or performing an RLC retransmission enhancement on an RLC entity (or DRB) corresponding to at least one DRB (or RLC bearer) configured with the RLC retransmission enhancement, or performing an RLC retransmission enhancement on an RLC entity (or DRB) corresponding to a PDCP SDU associated with a PDCP discardTimer, or performing an RLC retransmission enhancement on an RLC entity (or DRB) corresponding to at least one logical channel (LCH) included in the LCG.

In some embodiments, performing an RLC retransmission enhancement includes: performing an RLC retransmission enhancement on at least one RLC SDU or RLC SDU segment in an RLC entity, for example, performing an RLC retransmission enhancement on all RLC SDUs or RLC SDU segments in the RLC entity, or performing an RLC retransmission enhancement on a part of RLC SDUs or RLC SDU segments in the RLC entity, or performing an RLC retransmission enhancement on RLC SDUs or RLC SDU segments indicated by the PDCP layer in the RLC entity.

In the above embodiment, performing an RLC retransmission enhancement may also be expressed as initiating an RLC retransmission enhancement, or starting an RLC retransmission enhancement, or using an RLC retransmission enhancement, or activating an RLC retransmission enhancement, etc.

In some embodiments, stopping an RLC retransmission enhancement includes: stopping an RLC retransmission enhancement for all RLC entities (or DRBs) corresponding to configured DRBs, or stopping an RLC retransmission enhancement for an RLC entity (or DRB) corresponding to a configured DRB (or RLC bearer) of an RLC retransmission enhancement, or stopping an RLC retransmission enhancement for an RLC entity (or DRB) corresponding to a PDCP SDU associated with a PDCP discardTimer, or stopping an RLC retransmission enhancement for an RLC entity (or DRB) corresponding to at least one LCH included in the LCG.

In some embodiments, stopping an RLC retransmission enhancement includes: stopping an RLC retransmission enhancement for at least one RLC SDU or RLC SDU segment in an RLC entity, for example, stopping an RLC retransmission enhancement for all RLC SDUs or RLC SDU segments in the RLC entity, or stopping an RLC retransmission enhancement for a part of RLC SDUs or RLC SDU segments in the RLC entity, or stopping an RLC retransmission enhancement for RLC SDUs or RLC SDU segments indicated by a PDCP layer in the RLC entity.

In the above embodiments, stopping an RLC retransmission enhancement may also be expressed as turning off an RLC retransmission enhancement, or ending an RLC retransmission enhancement, or not using RLC retransmission enhancement, or deactivating an RLC retransmission enhancement, etc.

In the above embodiments, the method of transmitting and receiving data in the present disclosure illustrates a method of configuring an RLC retransmission enhancement, which helps reliably transmitting XR data to a peer device within a packet delay budget (PDB) of an XR service, and is easily implemented.

As can be seen from the above embodiments, in the method of transmitting and receiving data according to the embodiments of the present disclosure, after transmitting, to the peer device, the RLC service data unit or the RLC service data unit segment, while waiting to receive the RLC status protocol data unit of the peer device, the terminal equipment first retransmits the RLC service data unit or the RLC service data unit segment N times. Thus, time of waiting for the RLC status protocol data unit of the peer device is able to be fully utilized, the number of RLC retransmissions is increased within a packet delay budget, the transmission reliability of the RLC layer is improved, and the transmission of new transmissions is avoided from being affected.

In addition, details of RLC retransmission related enhancements, such as the number of retransmissions, retransmission occasions, an operation after receiving an RLC status PDU, and configuration of the RLC retransmission enhancements are described, which helps reliably transmitting XR data to a peer device within a packet delay budget (PDB) of an XR service, is easily implemented, and fills a gap in details related to the RLC retransmission enhancements.

The above embodiments only illustrate the present disclosure. However, the present disclosure is not limited thereto, and appropriate variants may be made on the basis of the above embodiments. For example, the above embodiments may be used alone, or one or more of the above embodiments may be combined together.

It should be noted that the steps related to the present disclosure are only described above, however, the present disclosure is not limited thereto. The method of receiving data in the present disclosure may also include other steps. Reference may be made to the related arts for specific content of these steps.

The above embodiments only illustrate the embodiments of the present disclosure. However, the present disclosure is not limited thereto, and appropriate variants may be made on the basis of the above embodiments. For example, the above embodiments may be used alone, or one or more of the above embodiments may be combined together.

### Embodiments of a Second Aspect

Embodiments of the present disclosure provide a method of transmitting and receiving data described from a terminal equipment side.

FIG. 7 is another schematic diagram illustrating the method of transmitting and receiving data according to the embodiments of the present disclosure. The method is applied to a terminal equipment. As illustrated in the FIG. 7, the method includes:
701: a terminal equipment transmits, to a network device, information for indicating whether an RLC retransmission enhancement is supported.

Therefore, the network device is enabled to know capabilities of the terminal equipment related to the RLC retransmission enhancement, such that the terminal equipment is configured with an RLC retransmission enhancement consistent with the capabilities of the terminal equipment, and incorrect or invalid configuration of the RLC retransmission enhancement is avoided.

In some embodiments, the information is carried by a UE capability information message, or an RRC connection establishment complete message, or an RRC reconfiguration complete message, or a UE assistance information message.

In some embodiments, whether a terminal equipment supports an RLC retransmission enhancement is indicated by different values of the information, for example, the information is 1 bit, and a value of the 1 bit is 1, which indicates that the terminal equipment supports the RLC retransmission enhancement, and a value of the 1 bit is 0, which indicates that the terminal equipment does not support the RLC retransmission enhancement, and vice versa; or whether a terminal equipment supports an RLC retransmission enhancement is indicated by presence of the information or not, for example, the information is 1 bit, presence of the 1 bit indicates that the terminal equipment supports the RLC retransmission enhancement, and absence of the 1 bit indicates that the terminal equipment does not support the RLC retransmission enhancement, and vice versa.

In some embodiments, the information indicates a DRB, or a DRB configured in an RLC AM, or an RLC bearer or an RLC AM bearer configured for a terminal equipment, respectively. For example, for each DRB or DRB configured in an RLC AM or RLC bearer or RLC AM bearer configured for the terminal equipment, the information is 1 bit, and different values of the 1 bit indicate whether a configured data radio bearer (DRB) of the terminal equipment or a data radio bearer of the terminal equipment configured in an RLC acknowledged mode or an RLC bearer of the terminal equipment or an RLC bearer of the terminal equipment configured in an RLC acknowledged mode (RLC AM) supports an RLC retransmission enhancement. For example, a value of the 1 bit is 1, which indicates that a configured data radio bearer (DRB) of the terminal equipment or a data radio bearer of the terminal equipment configured in an RLC acknowledged mode or an RLC bearer of the terminal equipment or an RLC bearer of the terminal equipment configured in an RLC acknowledged mode (RLC AM) supports an RLC retransmission enhancement; a value of the 1 bit is 0, which indicates that a configured data radio bearer (DRB) of the terminal equipment or a data radio bearer of the terminal equipment configured in an RLC acknowledged mode or an RLC bearer of the terminal equipment or an RLC bearer of the terminal equipment configured in an RLC acknowledged mode (RLC AM) does not support an RLC retransmission enhancement, and vice versa; or presence of the 1 bit indicates that a configured data radio bearer (DRB) of the terminal equipment or a data radio bearer of the terminal equipment configured in an RLC acknowledged mode or an RLC bearer of the terminal equipment or an RLC bearer of the terminal equipment configured in an RLC acknowledged mode (RLC AM) supports an RLC retransmission enhancement; absence of the 1 bit indicates that a configured data radio bearer (DRB) of the terminal equipment or a data radio bearer of the terminal equipment configured in an RLC acknowledged mode or an RLC bearer of the terminal equipment or an RLC bearer of the terminal equipment configured in an RLC acknowledged mode (RLC AM) do not support an RLC retransmission enhancement, and vice versa.

In some embodiments, the information is a bitmap, and each bit in the bitmap indicates whether a configured data radio bearer (DRB) of a terminal equipment or a data radio bearer of a terminal equipment configured in an RLC acknowledged mode or an RLC bearer of a terminal equipment or an RLC bearer of a terminal equipment configured in an RLC acknowledged mode (RLC AM) supports an RLC retransmission enhancement. A relationship between a value of a bit and whether a configured DRB or a DRB in an RLC acknowledged mode or an RLC bearer or an RLC bearer in an RLC acknowledged mode indicated by the bit in the bitmap supports an RLC retransmission enhancement is as described in the above embodiments. For example, a value of the 1 bit in the bitmap is 1, which indicates that a configured DRB or a DRB in an RLC acknowledged mode or an RLC bearer or an RLC bearer in an RLC acknowledged mode supports an RLC retransmission enhancement, and a value of the 1 bit in the bitmap is 0, which indicates that a configured DRB or a DRB in an RLC acknowledged mode or an RLC bearer or an RLC bearer in an RLC acknowledged mode does not support an RLC retransmission enhancement, and vice versa.

In some embodiments, an order of bits indicating whether each configured DRB or DRB in an RLC acknowledged mode or RLC bearer or RLC bearer in an RLC acknowledged mode supports an RLC retransmission enhancement in the bitmap is arranged in an ascending or descending order according to an identifier of the configured DRB or an identifier of the DRB in the RLC acknowledged mode or an index or identifier of the RLC bearer or an index or identifier of the RLC bearer in the RLC acknowledged mode or an identifier of a logical channel, or the order is configured by a network device.

In some embodiments, the method further includes:
a terminal equipment receives configuration information for configuring an RLC retransmission enhancement transmitted by a network device.

Refer to the embodiments of the first aspect of the present disclosure for content related to the configuration information. The above content is incorporated herein and will not be described herein again.

Therefore, details of RLC retransmission enhancements, such as the number of retransmissions, retransmission occasions, an operation after receiving an RLC status PDU, and configuration of the RLC retransmission enhancements are described, which helps reliably transmitting XR data to a peer device within a packet delay budget (PDB) of an XR service, is easily implemented, and fills a gap in details related to the RLC retransmission enhancements.

In the above embodiments, the network device is enabled to know capabilities of the terminal equipment related to the RLC retransmission enhancement, such that the terminal equipment is configured with an RLC retransmission enhancement consistent with the capabilities of the terminal equipment, and incorrect or invalid configuration of the RLC retransmission enhancement is avoided.

The above embodiments only illustrate the present disclosure. However, the present disclosure is not limited thereto, and appropriate variants may be made on the basis of the above embodiments. For example, the above embodiments may be used alone, or one or more of the above embodiments or the embodiments of the first aspect of the present disclosure may be combined together.

It should be noted that the steps related to the present disclosure are only described above. However, the present disclosure is not limited thereto. The method of receiving data in the present disclosure may also include other steps. Reference may be made to the related arts for specific content of these steps.

The above embodiments only illustrate the embodiments of the present disclosure. However, the present disclosure is not limited thereto, and appropriate variants may be made on the basis of the above embodiments. For example, the above embodiments may be used alone, or one or more of the above embodiments may be combined together.

### Embodiments of a Third Aspect

Embodiments of the present disclosure provide a method of transmitting and receiving data described from a peer device side of a terminal equipment. The peer device may be a network device or other terminal equipment, and the peer device will be described below as an example of a network device.

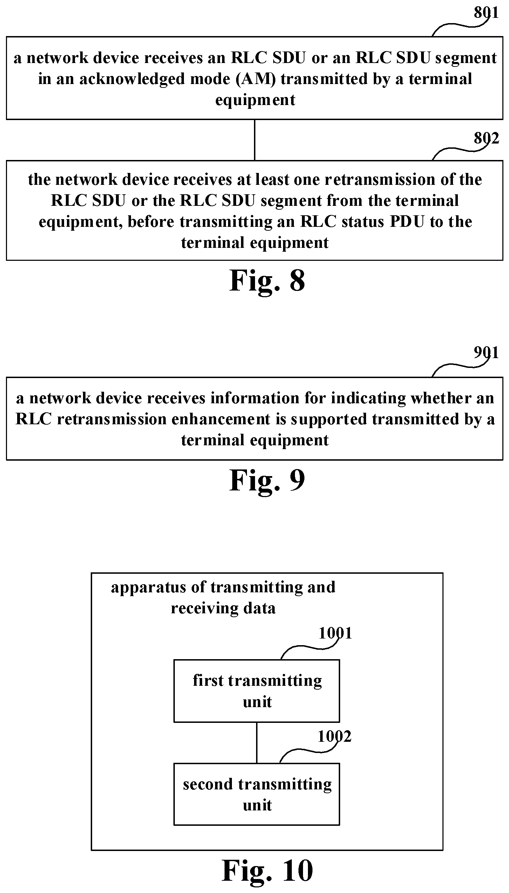

FIG. 8 is another schematic diagram illustrating the method of transmitting and receiving data according to the embodiments of the present disclosure. The method is applied to a network device. As illustrated in the FIG. 8, the method includes:
801: a network device receives an RLC service data unit (RLC SDU) or an RLC service data unit segment (RLC SDU segment) in an acknowledged mode (AM) transmitted by a terminal equipment; and
802: the network device receives at least one retransmission of the RLC service data unit or the RLC service data unit segment from the terminal equipment, before transmitting an RLC status protocol data unit (RLC STATUS PDU) to the terminal equipment.

According to the above embodiments, after the network device receives the RLC service data unit or the RLC service data unit segment transmitted by the terminal equipment, before the network device transmits the RLC status protocol data unit to the terminal equipment, the terminal equipment first retransmits the RLC service data unit or the RLC service data unit segment at least once (such as N times). Thus, the number of RLC retransmissions is able to be increased within a packet delay budget, the transmission reliability of the RLC layer is able to be improved, and the transmission of new transmissions is able to be avoided from being affected.

It should be noted that the FIG. 8 only schematically illustrates the embodiments of the present disclosure, however, the present disclosure is not limited thereto. For example, an order of execution of operations may be appropriately adjusted, and some other operations may be added, or some operations therein may be removed. And appropriate variants may be made by those skilled in the art according to the above content, without being limited to the disclosure illustrated in the FIG. 8.

In some embodiments, implementation and terms of 801 in the embodiments are similar to those of 301 in the embodiments of the first aspect of the present disclosure. The above related content is incorporated herein and will not be described herein again.

In some embodiments, when an RLC acknowledged mode is used, after a terminal equipment transmits, to a peer device, an RLC service data unit (RLC SDU) or an RLC service data unit segment (RLC SDU segment), the peer device feeds an RLC status protocol data unit (RLC STATUS PDU) back to the terminal equipment. The RLC STATUS PDU includes relevant information for feedback about the RLC SDU or the RLC SDU segment, and the relevant information is acknowledgement (ACK) information or negative acknowledgement (NACK) information. The ACK indicates that the peer device has successfully received the RLC SDU or the RLC SDU segment; the NACK indicates that the peer device has not received the RLC SDU or the RLC SDU segment. In this case, the terminal equipment may perform RLC retransmissions when retransmission requirements are met. A situation where the retransmission requirements are met is that, for example, the maximum number of RLC retransmissions has not been reached and/or the delay exceeds a packet delay budget (PDB) corresponding to the RLC SDU or the RLC SDU segment.

In some embodiments, in 802, before transmitting, to a terminal equipment, an RLC status protocol data unit (RLC STATUS PDU), a network device receives at least once (such as N times) RLC retransmission or repetition of the RLC service data unit or the RLC service data unit segment. Thus, while waiting for the RLC status protocol data unit (RLC STATUS PDU) from a peer device, the terminal equipment first autonomously performs N times retransmissions, is able to fully utilize time between transmission of the RLC SDU or the RLC SDU segment and reception of the RLC STATUS PDU, increase the number of RLC retransmissions, and improve the transmission reliability of the RLC layer.

In some embodiments, a value of the N is a positive integer configured by a network or predefined by a terminal equipment. For example, the network configures the value of the N via an RRC message and/or downlink control information (DCI) and/or a medium access control control element (MAC CE).

In some embodiments, the N times retransmissions are recorded in a retransmission counter (such as RETX_COUNT) associated with the RLC service data unit (RLC SDU) or the RLC service data unit segment (RLC SDU segment). Refer to the embodiments of the first aspect of the present disclosure for details of the retransmission counter. The above relevant content is incorporated herein and will not be described herein again.

In some embodiments, the N times retransmissions are recorded as one time in the retransmission counter. That is, after transmitting, to a peer device, an RLC service data unit (RLC SDU) or an RLC service data unit segment (RLC SDU segment) in an acknowledged mode, before receiving an RLC status protocol data unit (RLC STATUS PDU) from the peer device, a terminal equipment performs N times RLC retransmissions, however, in the retransmission counter, these N times retransmissions are regarded as one retransmission, that is, the retransmission counter is increased by 1, so as to avoid the recorded number of RLC retransmissions from reaching the maximum number of RLC retransmission prematurely and triggering a radio link failure, and affecting reliable transmission of XR data of the XR service.

In some embodiments, the N times retransmissions are recorded as N times in the retransmission counter. That is, after transmitting, to a peer device, an RLC service data unit (RLC SDU) or an RLC service data unit segment (RLC SDU segment) in an acknowledged mode, before receiving an RLC status protocol data unit (RLC STATUS PDU) from the peer device, a terminal equipment performs N times RLC retransmissions, and all of these N times retransmissions are recorded in the retransmission counter, that is, the retransmission counter is increased by N. Accordingly, the maximum number of RLC retransmissions needs to be a large value, so as to avoid the recorded number of RLC retransmissions from reaching the maximum number of RLC retransmissions prematurely and triggering a radio link failure, and affecting reliable transmission of XR data of the XR service.

In some embodiments, when N times retransmissions are recorded in a retransmission counter associated with the RLC service data unit or the RLC service data unit segment, the maximum number of RLC retransmissions is greater than the number of RLC retransmissions recorded in the retransmission counter for the N times retransmissions. For example, when the N times retransmissions are recorded as one time in the retransmission counter, the maximum number of RLC retransmissions should be greater than 1; for another example, when the N times retransmissions are recorded as N times in the retransmission counter, the maximum number of RLC retransmissions should be greater than N. Therefore, triggering a radio link failure since the maximum number of RLC retransmissions is reached after the N times retransmissions is avoided.

In some embodiments, the N times retransmissions are not recorded in a retransmission counter associated with the RLC service data unit (RLC SDU) or the RLC service data unit segment (RLC SDU segment). Thus, the N times retransmissions performed before the RLC status protocol data unit (RLC STATUS PDU) of the peer device is received do not result in a change in the value of the retransmission counter, so as not to occupy an opportunity for RLC retransmissions and not to set the maximum number of RLC retransmissions to be a large value, so as to avoid the number of RLC retransmissions from reaching the maximum number of RLC retransmissions prematurely and triggering a radio link failure, therefore, reliability of XR data transmission of the XR service is improved.

In some embodiments, the N times retransmissions are located in continuous slots or symbols. Refer to the embodiments of the first aspect of the present disclosure for related content. The above related content is incorporated herein and will not be described herein again.

In some embodiments, the N times retransmissions are located in discontinuous slots or symbols. Refer to the embodiments of the first aspect of the present disclosure for related content. The above related content is incorporated herein and will not be described herein again.

In some embodiments, the N times retransmissions are located in discontinuous slots or symbols, including all the N times retransmissions being located in discontinuous slots or symbols, or part of the N times retransmissions being continuous.

In some embodiments, whether N times retransmissions are located in continuous slots or symbols and when the N times retransmissions are located in discontinuous slots or symbols, an interval of the discontinuous slots or symbols may be determined in a plurality of ways, for example, configured by a network device, and/or predefined by a terminal equipment, and/or determined according to a position of an uplink grant (UL grant) configured or scheduled by a network device. Refer to the embodiments of the first aspect of the present disclosure for related content. The above related content is incorporated herein and will not be described herein again.

In some embodiments, an interval of the discontinuous slots or symbols includes the number of slots or the number of symbols.

In some embodiments, intervals between slots or symbols of two adjacent retransmissions in N times retransmissions may be the same or different.

In some embodiments, slots or symbols in which two adjacent retransmissions in N times retransmissions are located may be partially continuous.

In some embodiments, the method further includes:
a network device transmits, to the terminal equipment, an RLC status protocol data unit, so that the terminal equipment performs an operation related to an RLC retransmission according to the received RLC status protocol data unit.

In some embodiments, the terminal equipment performs an operation related to an RLC retransmission according to the received RLC status protocol data unit. Refer to the embodiments of the first aspect of the present disclosure. The above related content is incorporated herein and will not be described herein again.

In some embodiments, an RLC status protocol data unit transmitted by a network device includes a NACK for the RLC SDU or the RLC SDU segment, or an ACK for the RLC SDU or the RLC SDU segment.

In some embodiments, when an RLC status protocol data unit transmitted by a network device includes a NACK for the RLC SDU or the RLC SDU segment, the method further includes:
retransmitting the RLC service data unit or the RLC service data unit segment M times.

In some embodiments, a value of the M is a positive integer configured by a network or predefined by a terminal equipment. For example, the network configures the value of the M via an RRC message and/or downlink control information (DCI) and/or a medium access control control element (MAC CE).

In some embodiments, the M times retransmissions are recorded in a retransmission counter associated with the RLC service data unit (RLC SDU) or the RLC service data unit segment (RLC SDU segment). Reference may be made to the above embodiment for the retransmission counter, which will not be described herein again.

In some embodiments, the M times retransmissions are recorded as one time in the retransmission counter. That is, when receiving a NACK for the RLC SDU or the RLC SDU segment from the peer device, a terminal equipment performs M times RLC retransmissions on the RLC SDU or the RLC SDU segment, but records these M times retransmissions as one retransmission in a retransmission counter, so as to avoid the recorded number of RLC retransmissions from reaching the maximum number of RLC retransmissions prematurely and triggering a radio link failure, and affecting reliable transmission of XR data of the XR service.

In some embodiments, the M times retransmissions are recorded as M times in the retransmission counter. That is, when receiving a NACK for the RLC SDU or the RLC SDU segment from the peer device, a terminal equipment performs M times RLC retransmissions on the RLC SDU or the RLC SDU segment, and records all of the M times retransmissions in the retransmission counter. Accordingly, the maximum number of RLC retransmissions may be set to a large value, so as to avoid the recorded number of RLC retransmissions from reaching the maximum number of RLC retransmissions prematurely and triggering a radio link failure, and affecting reliable transmission of XR data of the XR service.

In some embodiments, when M times retransmissions are recorded in a retransmission counter associated with the RLC service data unit or the RLC service data unit segment, a maximum number of RLC retransmissions is greater than or equal to a sum of the number of RLC retransmissions recorded in the retransmission counter for the M times retransmissions and the number of RLC retransmissions recorded in the retransmission counter for the N times retransmissions. For example, when the M times retransmissions are recorded as 1 in the retransmission counter and the N times retransmissions are recorded as 1 in the retransmission counter, the maximum number of RLC retransmissions should be greater than or equal to 2. For another example, when the M times retransmissions are recorded as M times in the retransmission counter and the N times retransmissions are recorded as 1 in the retransmission counter, the maximum number of RLC retransmissions should be greater than or equal to M+1. When the N times retransmissions are recorded as N times in the retransmission counter, a value of the maximum number of RLC retransmissions is determined in a similar manner, so as to avoid reaching the maximum number of RLC retransmissions prematurely and triggering a radio link failure.

In some embodiments, the M times retransmissions are located in continuous slots or symbols, or the M times retransmissions are located in discontinuous slots or symbols. Refer to the embodiments of the first aspect of the present disclosure for related content. The above related content is incorporated herein and will not be described herein again.

In some embodiments, whether M times retransmissions are located in continuous slots or symbols and when the M times retransmissions are located in discontinuous slots or symbols, an interval of the discontinuous slots or symbols may be determined in a plurality of ways, for example, configured by a network device, and/or predefined by a terminal equipment, and/or determined according to a position of an uplink grant (UL grant) configured or scheduled by a network device. Refer to the embodiments of the first aspect of the present disclosure for related content. The above related content is incorporated herein and will not be described herein again.

In some embodiments, an interval of the discontinuous slots or symbols includes the number of slots or the number of symbols.

In some embodiments, when a value of M is greater than 2, intervals between slots or symbols of two adjacent retransmissions in M times retransmissions may be the same or different.

In some embodiments, when a value of M is greater than 2, slots or symbols in which two adjacent retransmissions in M times retransmissions are located may be partially continuous.

In some embodiments, a value of the M and a value of the N may be the same or different.

In some embodiments, the N times retransmissions and the M times retransmissions are both located in continuous slots or symbols, or the N times retransmissions and the M times retransmissions are both located in discontinuous slots or symbols, or one of the N times retransmissions and the M times retransmissions is located in a continuous slot or symbol and the other is located in a discontinuous slot or symbol, which is not limited in the present disclosure.

In some embodiments, the method further includes:
a network device transmits, to the terminal equipment, an RLC status protocol data unit including a NACK for the RLC SDU or the RLC SDU segment, after receiving M times retransmissions from a terminal equipment; and
the network device receives L retransmissions of the RLC service data unit or the RLC service data unit segment transmitted by the terminal equipment.

Therefore, when a NACK is received from a peer device after M times retransmissions, L retransmissions may be performed autonomously. A value of the L may be the same as that of M or N, or different from that of M and N.

In some embodiments, the method further includes:
a network device transmits, to a terminal equipment, configuration information for configuring an RLC retransmission enhancement.

The configuration information is used to configure the number of retransmissions related to RLC retransmissions, retransmission occasions, an operation after receiving an RLC status PDU, etc.

In some embodiments, the configuration information may be related to or configured with at least one of following:
the terminal equipment;
a data radio bearer (DRB) of the terminal equipment;
a data radio bearer of the terminal equipment configured in an RLC acknowledged mode (RLC AM);
an RLC bearer of the terminal equipment; or
an RLC bearer of the terminal equipment configured in an RLC acknowledged mode (RLC AM).

In some embodiments, the configuration information includes at least one of the following information:
whether to use an RLC retransmission enhancement;
an initiation condition and/or a termination condition and/or a duration of using an RLC retransmission enhancement;
N and/or M times RLC retransmissions;
whether RLC retransmissions are in continuous slots or symbols;
an RLC retransmission-related timer; or
an interval of RLC retransmissions.

In some embodiments, the configuration information further includes configuration of an initial state or default state of an RLC retransmission enhancement. For example, the initial state or default state of the RLC retransmission enhancement includes activation and deactivation.

In some embodiments, the initial state or default state is represented by 1 bit, and different values of the 1 bit represent that the initial state or default state of an RLC retransmission enhancement is activated, or the initial state or default state of an RLC retransmission enhancement is deactivated.

In some embodiments, the initial state or default state is represented by a bitmap, and each bit in the bitmap corresponds to an initial state or default state of an RLC retransmission enhancement of a configured radio bearer (DRB) of a terminal equipment or a data radio bearer of a terminal equipment configured in an RLC acknowledged mode or an RLC bearer of a terminal equipment or an RLC bearer of a terminal equipment configured in an RLC acknowledged mode (RLC AM).

In some embodiments, the configuration information is carried by RRC signaling, for example, the configuration information is contained in an RRC message such as an RRC connection request message and an RRC connection establishment complete message.

In some embodiments, reference may be made to the embodiments of the first aspect of the present disclosure for content related to the configuration information. The above content is incorporated herein and will not be described herein again.

In some embodiments, the method further includes:
a network device transmits, to the terminal equipment, indication information for indicating a state of an RLC retransmission enhancement. For example, the state of the RLC retransmission enhancement includes activation and deactivation, and the indication information indicates activation of the RLC retransmission enhancement or deactivation of the RLC retransmission enhancement.

In some embodiments, the indication information is 1 bit, and different states of an RLC retransmission enhancement are indicated by different values of the 1 bit.

In some embodiments, the indication information is a bitmap, and each bit in the bitmap indicates an state of an RLC retransmission enhancement of a configured radio bearer (DRB) of a terminal equipment or a data radio bearer of a terminal equipment configured in an RLC acknowledged mode or an RLC bearer of a terminal equipment or a RLC bearer of a terminal equipment configured in an RLC acknowledged mode (RLC AM).

In some embodiments, the indication information is carried by downlink control information (DCI) or a medium access control control element (MAC CE) or an RLC control protocol data unit (RLC control PDU) or a PDCP control protocol data unit (PDCP control PDU).

Thus, the RLC retransmission enhancement state of the terminal equipment or the configured radio bearer DRB of the terminal equipment or the data radio bearer of the terminal equipment configured in the RLC acknowledged mode or the RLC bearer of the terminal equipment or the RLC bearer of the terminal equipment configured in the RLC acknowledged mode (RLC AM) may be dynamically indicated, therefore, an RLC retransmission enhancement function is more flexibly applied.

In some embodiments, reference may be made to the embodiments of the first aspect of the present disclosure for content related to the indication information. The above content is incorporated herein and will not be described herein again.

In some embodiments, the method further includes: a network device receives information indicating whether an RLC retransmission enhancement is supported transmitted by a terminal equipment. Thus, the network device is able to know capabilities of the terminal equipment related to the RLC retransmission enhancement, such that the terminal equipment is configured with an RLC retransmission enhancement consistent with the capabilities of the terminal equipment, and incorrect or invalid configuration of the RLC retransmission enhancement is avoided.

In some embodiments, the information is carried by a UE capability information message, or an RRC connection establishment complete message, or an RRC reconfiguration complete message.

In some embodiments, the information is 1 bit, and different values of the 1 bit indicate whether a terminal equipment supports an RLC retransmission enhancement.

In some embodiments, the information is a bitmap, and each bit in the bitmap indicates whether a configured radio bearer (DRB) of a terminal equipment or a data radio bearer of a terminal equipment configured in an RLC acknowledged mode or an RLC bearer of a terminal equipment or an RLC bearer of a terminal equipment configured in an RLC acknowledged mode (RLC AM) supports an RLC retransmission enhancement.

In some embodiments, reference may be made to the embodiments of the first aspect of the present disclosure for content related to the information. The above content is incorporated herein and will not be described herein again

As can be seen from the above embodiments, in the method of transmitting and receiving data according to the embodiments of the present disclosure, after transmitting, to a peer device, an RLC service data unit or an RLC service data unit segment, while waiting to receive an RLC status protocol data unit of the peer device, a terminal equipment first retransmits the RLC service data unit or the RLC service data unit segment N times. Thus, time of waiting for the RLC status protocol data unit of the peer device is able to be fully utilized, the number of RLC retransmissions is able to be increased within a packet delay budget, the transmission reliability of the RLC layer is able to be improved, and the transmission of new transmissions is able to be avoided from being affected.

In addition, details of RLC retransmission related enhancements, such as the number of retransmissions, retransmission occasions, an operation after receiving an RLC status PDU, and configuration of the RLC retransmission enhancements are described, which helps reliably transmitting XR data to a peer device within a packet delay budget (PDB) of an XR service, is easily implemented, and fills a gap in details related to the RLC retransmission enhancements.

Implementation and terms in this embodiment are similar to those in the embodiments of the first aspect of the present disclosure. The above related content is incorporated herein and will not be described herein again.

The above embodiments only illustrate the present disclosure. However, the present disclosure is not limited thereto, and appropriate variants may be made on the basis of the above embodiments. For example, the above embodiments may be used alone, or one or more of the above embodiments may be combined together.

It should be noted that the steps related to the present disclosure are only described above. However, the present disclosure is not limited thereto. The method of receiving data in the present disclosure may also include other steps. Reference may be made to the related arts for specific content of these steps.

The above embodiments only illustrate the embodiments of the present disclosure. However, the present disclosure is not limited thereto, and appropriate variants may be made on the basis of the above embodiments. For example, the above embodiments may be used alone, or one or more of the above embodiments may be combined together.

### Embodiments of a Fourth Aspect

Embodiments of the present disclosure provide a method of transmitting and receiving data described from a network device side.

FIG. 9 is another schematic diagram illustrating the method of transmitting and receiving data according to the embodiments of the present disclosure. The method is applied to a network device. As illustrated in the FIG. 9, the method includes:
901: a network device receives information for indicating whether an RLC retransmission enhancement is supported transmitted by a terminal equipment.

Thus, the network device is able to know capabilities of the terminal equipment related to the RLC retransmission enhancement, such that the terminal equipment is configured with an RLC retransmission enhancement consistent with the capabilities of the terminal equipment, and incorrect or invalid configuration of the RLC retransmission enhancement is avoided.

In some embodiments, the information is carried by a UE capability information message, or an RRC connection establishment complete message, or an RRC reconfiguration complete message, or a UE assistance information message.

In some embodiments, different values of this information are used to indicate whether a terminal equipment supports an RLC retransmission enhancement. For example, the information is 1 bit, and a value of the 1 bit is 1, which indicates that a terminal equipment supports an RLC retransmission enhancement, and a value of the 1 bit is 0, which indicates that the terminal equipment does not support the RLC retransmission enhancement, and vice versa.

In some embodiments, whether a terminal equipment supports an RLC retransmission enhancement is indicated by presence of the information or not. For example, the information is 1 bit, and presence of the 1 bit indicates that a terminal equipment supports an RLC retransmission enhancement, and absence of the 1 bit indicates that the terminal equipment does not support the RLC retransmission enhancement, and vice versa.

In some embodiments, the information indicates a DRB or a DRB configured in an RLC AM or an RLC bearer or an RLC AM bearer configured for a terminal equipment, respectively. For example, for each DRB or DRB configured in an RLC AM or RLC bearer or RLC AM bearer configured for the terminal equipment, the information is 1 bit, and different values of the 1 bit indicate whether a configured data radio bearer (DRB) of the terminal equipment or a data radio bearer of the terminal equipment configured in an RLC acknowledged mode or an RLC bearer of the terminal equipment or an RLC bearer of the terminal equipment configured in an RLC acknowledged mode (RLC AM) supports an RLC retransmission enhancement. For example, a value of the 1 bit is 1, which indicates that a configured data radio bearer (DRB) of the terminal equipment or a data radio bearer of the terminal equipment configured in an RLC acknowledged mode or an RLC bearer of the terminal equipment or an RLC bearer of the terminal equipment configured in an RLC acknowledged mode (RLC AM) supports an RLC retransmission enhancement; a value of the 1 bit is 0, which indicates that a configured data radio bearer (DRB) of the terminal equipment or a data radio bearer of the terminal equipment configured in an RLC acknowledged mode or an RLC bearer of the terminal equipment or an RLC bearer of the terminal equipment configured in an RLC acknowledged mode (RLC AM) does not support an RLC retransmission enhancement, and vice versa; or presence of the 1 bit indicates that a configured data radio bearer (DRB) of the terminal equipment or a data radio bearer of the terminal equipment configured in an RLC acknowledged mode or an RLC bearer of the terminal equipment or an RLC bearer of the terminal equipment configured in an RLC acknowledged mode (RLC AM) supports an RLC retransmission enhancement; absence of the 1 bit indicates that a configured radio bearer (DRB) of the terminal equipment or a data radio bearer of the terminal equipment configured in an RLC acknowledged mode or an RLC bearer of the terminal equipment or an RLC bearer of the terminal equipment configured in an RLC acknowledged mode (RLC AM) do not support an RLC retransmission enhancement, and vice versa.

In some embodiments, the information is a bitmap, and each bit in the bitmap indicates whether a configured data radio bearer (DRB) of a terminal equipment or a data radio bearer of a terminal equipment configured in an RLC acknowledged mode or an RLC bearer of a terminal equipment or an RLC bearer of a terminal equipment configured in an RLC acknowledged mode (RLC AM) supports an RLC retransmission enhancement. A relationship between a value of a bit and whether a configured DRB or a DRB in an RLC acknowledged mode or an RLC bearer or an RLC bearer in an RLC acknowledged mode indicated by the bit in the bitmap supports an RLC retransmission enhancement is as described in the above embodiments. For example, a value of the 1 bit in the bitmap is 1, which indicates that a configured DRB or a DRB in an RLC acknowledged mode or an RLC bearer or an RLC bearer in an RLC acknowledged mode supports an RLC retransmission enhancement, and a value of the 1 bit in the bitmap is 0, which indicates that a configured DRB or a DRB in an RLC acknowledged mode or an RLC bearer or an RLC bearer in an RLC acknowledged mode does not support an RLC retransmission enhancement, and vice versa.

In some embodiments, an order of bits indicating whether each configured DRB or DRB in an RLC acknowledged mode or RLC bearer or RLC bearer in an RLC acknowledged mode supports an RLC retransmission enhancement in the bitmap is arranged in an ascending or descending order according to an identifier of the configured DRB or an identifier of the DRB in the RLC acknowledged mode or an index or identifier of the RLC bearer or an index or identifier of the RLC bearer in the RLC acknowledged mode or an identifier of a logical channel, or the order is configured by a network device.

In some embodiments, the method further includes:
a network device transmits, to a terminal equipment, configuration information for configuring an RLC retransmission enhancement.

Reference may be made to the embodiments of the third aspect of the present disclosure for content related to the configuration information. The above content is incorporated herein and will not be described herein again

Therefore, details of RLC retransmission enhancements, such as the number of retransmissions, retransmission occasions, an operation after receiving an RLC status PDU, and configuration of the RLC retransmission enhancements are described, which helps reliably transmitting XR data to a peer device within a packet delay budget (PDB) of an XR service, is easily implemented, and fills a gap in details related to the RLC retransmission enhancements.

In the above embodiments, the network device is able to know capabilities of the terminal equipment related to the RLC retransmission enhancements, such that the terminal equipment is configured with an RLC retransmission enhancement consistent with the capabilities of the terminal equipment, and incorrect or invalid configuration of the RLC retransmission enhancement is avoided.

Implementation and terms in this embodiment are similar to those in the embodiments of the second aspect of the present disclosure. The above related content is incorporated herein and will not be described herein again.

The above embodiments only illustrate the present disclosure. However, the present disclosure is not limited thereto, and appropriate variants may be made on the basis of the above embodiments. For example, the above embodiments may be used alone, or one or more of the above embodiments may be combined together.

It should be noted that the steps related to the present disclosure are only described above. However, the present disclosure is not limited thereto. The method of receiving data in the present disclosure may also include other steps. Reference may be made to the related arts for specific content of these steps.

The above embodiments only illustrate the embodiments of the present disclosure. However, the present disclosure is not limited thereto, and appropriate variants may be made on the basis of the above embodiments. For example, the above embodiments may be used alone, or one or more of the above embodiments may be combined together.

### Embodiments of a Fifth Aspect

Embodiments of the present disclosure provide an apparatus of transmitting and receiving data, applied to/configured in a terminal equipment. The apparatus of transmitting and receiving data and the method of transmitting and receiving data in the embodiments of the first aspect provided in the present disclosure are produced based on the same inventive concept and have similar principles for solving problems. Therefore, reference is made to implementation of the method of transmitting and receiving data in the embodiments of the first aspect provided in the present disclosure for implementation of the apparatus of transmitting and receiving data, and the duplicate content will not be described herein again. As used below, the term "unit" or "module" may be a combination of software and/or hardware that implements a predetermined function. Although the system described in the following embodiments is preferably implemented in software, implementation of hardware, or a combination of software and hardware, is also possible and conceived.

FIG. 10 is a schematic diagram illustrating an apparatus of transmitting and receiving data according to the embodiments of the present disclosure. As illustrated in the FIG. 10, the apparatus includes:
a first transmitting unit 1001 configured to transmit, to a peer device, an RLC service data unit (RLC SDU) or an RLC service data unit segment (RLC SDU segment) in an acknowledged mode (AM); and
a second transmitting unit 1002 configured to retransmit the RLC service data unit or the RLC service data unit segment at least once before receiving an RLC status protocol data unit (RLC STATUS PDU) from the peer device.

According to the above embodiment, after transmitting, to the peer device, the RLC service data unit or the RLC service data unit segment, the terminal equipment first retransmits the RLC service data unit or the RLC service data unit segment at least once (such as N times), while waiting to receive the RLC status protocol data unit from the peer device. Thus, the number of RLC retransmissions is able to be increased within a packet delay budget, the transmission reliability of the RLC layer is able to be improved and the transmission of new transmissions is able to be avoided from being affected.

In some embodiments, the peer device includes other terminal equipments different from a terminal equipment transmitting an RLC service data unit, or is a network device.

In some embodiments, the RLC STATUS PDU includes relevant information of feedback on the RLC SDU or the RLC SDU segment, and the relevant information is acknowledgement (ACK) information or negative acknowledgement (NACK) information.

In some embodiments, a value of the N is a positive integer configured by a network or predefined by a terminal equipment.

In some embodiments, the N times retransmissions are recorded in a retransmission counter associated with the RLC service data unit (RLC SDU) or the RLC service data unit segment (RLC SDU segment).

In some embodiments, the N times retransmissions are recorded as one time in the retransmission counter; or the N times retransmissions are recorded as N times in the retransmission counter.

In some embodiments, the N times retransmissions are not recorded in a retransmission counter associated with the RLC service data unit (RLC SDU) or the RLC service data unit segment (RLC SDU segment).

In some embodiments, the N times retransmissions are located in continuous slots or symbols; or the N times retransmissions are located in discontinuous slots or symbols.

In some embodiments, an interval of the discontinuous slots or symbols is:
configured by a network device; and/or
predefined; and/or
determined according to a position of an uplink grant (UL grant) configured or scheduled by a network device.

In some embodiments, the apparatus further includes:
a fifth receiving unit 1005 (not shown) configured to receive an RLC status protocol data unit transmitted by the peer device, the RLC status protocol data unit including a NACK for the RLC SDU or the RLC SDU segment; and
a seventh transmitting unit 1006 (not shown) configured to retransmit the RLC service data unit or the RLC service data unit segment M times.

In some embodiments, the M times retransmissions are recorded in a retransmission counter associated with the RLC service data unit.

In some embodiments, the M times retransmissions are recorded as one time in the retransmission counter; or the M times retransmissions are recorded as M times in the retransmission counter.

In some embodiments, the apparatus further includes:
a first receiving unit 1003 (not shown) configured to receive configuration information for configuring an RLC retransmission enhancement transmitted by a network device.

In some embodiments, the configuration information may be related to or configured with at least one of following:
the terminal equipment;
a data radio bearer (DRB) of the terminal equipment;
a data radio bearer (DRB) of the terminal equipment configured in an RLC acknowledged mode (RLC AM);
an RLC bearer of the terminal equipment; or
an RLC bearer of the terminal equipment configured in an RLC acknowledged mode (RLC AM).

In some embodiments, the configuration information includes at least one of:
whether to use an RLC retransmission enhancement;
an initiation condition and/or a termination condition and/or a duration of using an RLC retransmission enhancement;
the number N and/or M of RLC retransmissions;
whether RLC retransmissions are in continuous slots or symbols;
an RLC retransmission-related timer; or
an interval of RLC retransmissions.

In some embodiments, the configuration information further includes:
configuration of an initial state or default state of an RLC retransmission enhancement.

In some embodiments, the initial state or default state includes activation or deactivation.

In some embodiments, the initial state or default state is represented by 1 bit; and/or the initial state or default state is represented by a bitmap, and each bit in the bitmap corresponds to an initial state or default state of a configured DRB or a DRB in an RLC acknowledged mode or an RLC bearer or an RLC bearer in an RLC acknowledged mode.

In some embodiments, the configuration information is carried by an RRC message.

In some embodiments, the apparatus further includes:
a first processing unit 1007 (not shown) configured to configure, by an RRC layer of the terminal equipment, an RLC retransmission enhancement to an RLC layer, or indicate an RLC layer to use an RLC retransmission enhancement according to the RRC message; and/or
indicate, by an RRC layer of the terminal equipment, an RLC layer, to activate or deactivate an RLC retransmission enhancement according to the RRC message.

In some embodiments, the apparatus further includes:
a second receiving unit 1004 (not shown) configured to receive indication information for indicating a state of an RLC retransmission enhancement transmitted by the network device.

In some embodiments, a state of the RLC retransmission enhancement includes activation or deactivation.

In some embodiments, a state of the RLC retransmission enhancement is represented by a bitmap, and each bit in the bitmap corresponds to a state of an RLC retransmission enhancement of a configured DRB or a DRB in an RLC acknowledged mode or an RLC bearer or an RLC bearer in an RLC acknowledged mode or a DRB configured with an RLC retransmission enhancement or an RLC bearer configured with an RLC retransmission enhancement.

In some embodiments, the indication information is carried via downlink control information (DCI) or a medium access control control element (MAC CE) or an RLC control protocol data unit (RLC control PDU) or a PDCP control protocol data unit (PDCP control PDU).

In some embodiments, the apparatus further includes:
a second processing unit 1008 (not shown) configured to indicate an RLC layer to activate or deactivate an RLC retransmission enhancement by a MAC layer of the terminal equipment, according to the downlink control information or the medium access control control element; or
activate or deactivate an RLC retransmission enhancement by an RLC layer of the terminal equipment, according to the RLC control protocol data unit; or
indicate the RLC layer to activate or deactivate an RLC retransmission enhancement by a PDCP layer of the terminal equipment, according to the PDCP control protocol data unit.

In some embodiments, the apparatus further includes:
a third processing unit 1009 (not shown) configured to perform an RLC retransmission enhancement at a first moment before a PDCP discardTimer expires or when remaining time corresponding to at least one LCG is less than a first threshold; and/or stop an RLC retransmission enhancement when a PDCP discardTimer expires or at a second moment before a PDCP discardTimer expires or remaining time corresponding to at least one LCG is less than a second threshold or remaining time corresponding to at least one LCG is zero.

In some embodiments, a first time difference between the first moment and an expiration of the PDCP discardTimer, and/or a second time difference between the second moment and an expiration of the PDCP discardTimer, and/or the first threshold, and/or the second threshold are configured by a network device or predefined.

In some embodiments, the apparatus further includes:
a fourth processing unit 1010 (not shown) configured to enable a PDCP layer of the terminal equipment to indicate an RLC layer that a PDCP service data unit (PDCP SDU) and/or a PDCP protocol data unit (PDCP PDU) and/or an RLC service data unit (RLC SDU) and/or an RLC service data unit segment (RLC SDU segment) uses or activates or deactivates an RLC retransmission enhancement.

As can be seen from the above embodiments, in the method of transmitting and receiving data according to the embodiments of the present disclosure, after transmitting, to the peer device, the RLC service data unit or the RLC service data unit segment, while waiting to receive the RLC status protocol data unit of the peer device, the terminal equipment first retransmits the RLC service data unit or the RLC service data unit segment N times. Thus, time of waiting for the RLC status protocol data unit of the peer device is able to be fully utilized, the number of RLC retransmissions is able to be increased within the packet delay budget, the transmission reliability of the RLC layer is able to be improved, and the transmission of new transmissions is able to be avoided from being affected.

In addition, details of RLC retransmission related enhancements, such as the number of retransmissions, retransmission occasions, an operation after receiving an RLC status PDU, and configuration of the RLC retransmission enhancements are described, which helps reliably transmitting XR data to a peer device within a packet delay budget (PDB) of an XR service, is easily implemented, and fills a gap in details related to the RLC retransmission enhancements.

Implementation and terms in this embodiment are similar to those in the embodiments of the first aspect of the present disclosure. The above related content is incorporated herein and will not be described herein again.

The above embodiments only illustrate the embodiments of the present disclosure. However, the present disclosure is not limited thereto, and appropriate variants may be made on the basis of the above embodiments. For example, the above embodiments may be used alone, or one or more of the above embodiments may be combined together.

It should be noted that the steps related to the present disclosure are only described above. However, the present disclosure is not limited thereto. The method of transmitting and receiving data in the present disclosure may also include other steps. Reference may be made to the related arts for specific content of these steps.

The above embodiments only illustrate the embodiments of the present disclosure. However, the present disclosure is not limited thereto, and appropriate variants may be made on the basis of the above embodiments. For example, the above embodiments may be used alone, or one or more of the above embodiments may be combined together.

### Embodiments of a Sixth Aspect

Embodiments of the present disclosure provide an apparatus of transmitting and receiving data, applied to/configured in a terminal equipment. The apparatus of transmitting and receiving data and the method of transmitting and receiving data in the embodiments of the second aspect provided in the present disclosure are produced based on the same inventive concept and have similar principles for solving problems. Therefore, reference is made to implementation of the method of transmitting and receiving data in the embodiments of the second aspect provided in the present disclosure for implementation of the apparatus of transmitting and receiving data, and the duplicate content will not be described herein again. As used below, the term "unit" or "module" may be a combination of software and/or hardware that implements a predetermined function. Although the system described in the following embodiments is preferably implemented in software, implementation of hardware, or a combination of software and hardware, is also possible and conceived.

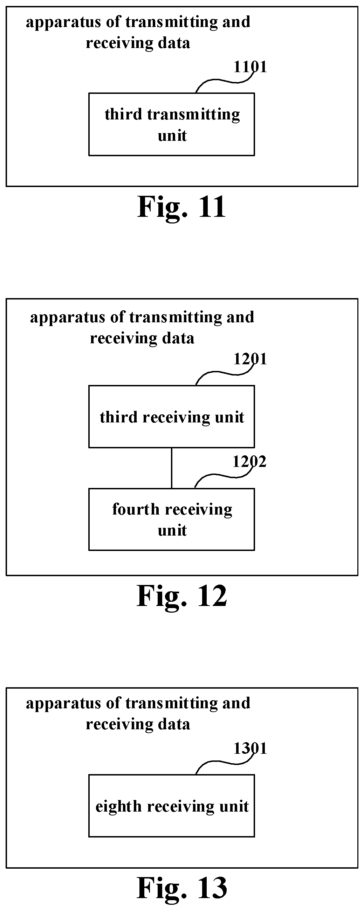

FIG. 11 is another schematic diagram illustrating the apparatus of transmitting and receiving data according to the embodiments of the present disclosure. As illustrated in the FIG. 11, the apparatus includes:
a third transmitting unit 1101 configured to transmit, to a network device, information for indicating whether an RLC retransmission enhancement is supported.

Therefore, the network device is enabled to know capabilities of the terminal equipment related to the RLC retransmission enhancement, such that the terminal equipment is configured with the RLC retransmission enhancement consistent with the capabilities of the terminal equipment, and incorrect or invalid configuration of the RLC retransmission enhancement is avoided.

In some embodiments, the information is carried by a UE capability information message, or an RRC connection establishment complete message, or an RRC reconfiguration complete message, or a UE assistance information message.

In some embodiments, the information uses 1 bit to indicate that an RLC retransmission enhancement is supported; and/or the information is indicated by 1 bit to indicate that an RLC retransmission enhancement is supported for a configured DRB or a DRB in an RLC acknowledged mode or an RLC bearer or an RLC bearer in an RLC acknowledged mode; and/or the information is indicated by a bitmap, and each bit in the bitmap indicates that a configured DRB or a DRB in an RLC acknowledged mode or an RLC bearer or an RLC bearer in an RLC acknowledged mode supports an RLC retransmission enhancement.

In some embodiments, the apparatus further includes:
a seventh receiving unit 1102 (not shown) configured to receive configuration information for configuring an RLC retransmission enhancement transmitted by a network device.

Reference is made to the embodiments of the first aspect of the present disclosure for content related to the configuration information. The above content is incorporated herein and will not be described herein again.

Therefore, details of RLC retransmission enhancements, such as the number of retransmissions, retransmission occasions, an operation after receiving an RLC status PDU, and configuration of the RLC retransmission enhancements are described, which helps reliably transmitting XR data to a peer device within a packet delay budget (PDB) of an XR service, is easily implemented, and fills a gap in details related to the RLC retransmission enhancements.

In the above embodiments, the network device is able to know capabilities of the terminal equipment related to the RLC retransmission enhancements, such that the terminal equipment is configured with an RLC retransmission enhancement consistent with the capabilities of the terminal equipment, and incorrect or invalid configuration of the RLC retransmission enhancement is avoided.

Implementation and terms in this embodiment are similar to those in the embodiments of the second aspect of the present disclosure. The above related content is incorporated herein and will not be described herein again.

The above embodiments only illustrate the embodiments of the present disclosure. However, the present disclosure is not limited thereto, and appropriate variants may be made on the basis of the above embodiments. For example, the above embodiments may be used alone, or one or more of the above embodiments may be combined together.

It should be noted that the steps related to the present disclosure are only described above. However, the present disclosure is not limited thereto. The method of receiving data in the present disclosure may also include other steps. Reference may be made to the related arts for specific content of these steps.

### Embodiments of a Seventh Aspect

Embodiments of the present disclosure provide an apparatus of transmitting and receiving data, applied to/configured in a peer device of a terminal equipment. The peer device may be a network device or other terminal equipment, and the peer device will be described below as an example of a network device. The apparatus of transmitting and receiving data and the method of transmitting and receiving data in the embodiments of the third aspect provided in the present disclosure are produced based on the same inventive concept and have similar principles for solving problems. Therefore, reference is made to implementation of the method of transmitting and receiving data in the embodiments of the first aspect provided in the present disclosure for implementation of the apparatus of transmitting and receiving data, and the duplicate content will not be described herein again. As used below, the term "unit" or "module" may be a combination of software and/or hardware that implements a predetermined function. Although the system described in the following embodiments is preferably implemented in software, implementation in hardware, or a combination of software and hardware, is also possible and conceived.

FIG. 12 is another schematic diagram illustrating the apparatus of transmitting and receiving data according to the embodiments of the present disclosure. As illustrated in the FIG. 12, the apparatus includes:
a third receiving unit 1201 configured to receive an RLC service data unit (RLC SDU) or an RLC service data unit segment (RLC SDU segment) in an acknowledged mode (AM) transmitted by a terminal equipment; and
a fourth receiving unit 1202 configured to receive at least one retransmission of the RLC service data unit or the RLC service data unit segment from the terminal equipment, before transmitting, to the terminal equipment, an RLC status protocol data unit (RLC STATUS PDU).

According to the above embodiments, the network device receives the RLC service data unit or the RLC service data unit segment transmitted by the terminal equipment, and before transmitting, to the terminal equipment, the RLC status protocol data unit, the network device retransmits the RLC service data unit or the RLC service data unit segment transmitted by the terminal equipment at least once (such as N times). Therefore, the number of RLC retransmissions is able to be increased within a packet delay budget, the transmission reliability of the RLC layer is able to be improved, and the transmission of new transmissions is able to be avoided from being affected.

In some embodiments, the network device includes other terminal equipments different from a terminal equipment transmitting an RLC service data unit, or is a network device.

In some embodiments, reference may be made to the embodiments of the third aspect for content related to the RLC STATUS PDU, a value of N, whether N times retransmissions are recorded in a retransmission counter associated with the RLC SDU or the RLC SDU segment, or whether the N times retransmissions are located in continuous slots or symbols. The above content is incorporated herein and will not be described herein again.

In some embodiments, the apparatus further includes:
a fourth transmitting unit 1203 (not shown) configured to transmit, to the terminal equipment, an RLC status protocol data unit, the RLC status protocol data unit including a NACK for the RLC SDU or the RLC SDU segment; and
a sixth receiving unit 1204 (not shown) configured to receive M times retransmissions of the RLC service data unit or the RLC service data unit segment.

In some embodiments, reference may be made to the embodiments of the third aspect for content related to a value of M, whether M times retransmissions are recorded in a retransmission counter associated with the RLC SDU or the RLC SDU segment, and whether the M times retransmissions are located in continuous slots or symbols. The above related content is incorporated here and will not be described here.

In some embodiments, the apparatus further includes:
a fifth transmitting unit 1205 (not shown) configured to transmit configuration information for configuring an RLC retransmission enhancement to a terminal equipment.

In some embodiments, reference may be made to the embodiments of the third aspect for content related to the configuration information. The above content is incorporated herein and will not be described herein again.

In some embodiments, the apparatus further includes:
a sixth transmitting unit 1206 (not shown) configured to transmit, to a terminal equipment, indication information indicating a state of an RLC retransmission enhancement.

In some embodiments, reference may be made to the embodiments of the third aspect for content related to the indication information. The above content is incorporated herein and will not be described herein again.

As can be seen from the above embodiments, in the method of transmitting and receiving data according to the embodiments of the present disclosure, after transmitting, to the peer device, the RLC service data unit or the RLC service data unit segment, the terminal equipment first retransmits the RLC service data unit or the RLC service data unit segment at least once (such as N times), while waiting to receive the RLC status protocol data unit from the peer device. Therefore, the time of waiting for the RLC status protocol data unit of the peer device is able to be fully utilized, the number of RLC retransmissions is able to be increased within a packet delay budget, the transmission reliability of the RLC layer is able to be improved, and the transmission of new transmissions is able to be avoided from being affected.

In addition, details of RLC retransmission related enhancements, such as the number of retransmissions, retransmission occasions, an operation after receiving an RLC status PDU, and configuration of the RLC retransmission enhancements are described, which helps reliably transmitting XR data to a peer device within a packet delay budget (PDB) of an XR service, is easily implemented, and fills a gap in details related to the RLC retransmission enhancements.

Implementation and terms in this embodiment are similar to those in the embodiments of the third aspect of the present disclosure. The above related content is incorporated herein and will not be described herein again.

The above embodiments only illustrate the embodiments of the present disclosure. However, the present disclosure is not limited thereto, and appropriate variants may be made on the basis of the above embodiments. For example, the above embodiments may be used alone, or one or more of the above embodiments may be combined together.

It should be noted that the steps related to the present disclosure are only described above. However, the present disclosure is not limited thereto. The method of transmitting and receiving data in the present disclosure may also include other steps. Reference may be made to the related arts for specific content of these steps.

The above embodiments only illustrate the embodiments of the present disclosure. However, the present disclosure is not limited thereto, and appropriate variants may be made on the basis of the above embodiments. For example, the above embodiments may be used alone, or one or more of the above embodiments may be combined together.

### Embodiments of an Eighth Aspect

Embodiments of the present disclosure provide an apparatus of transmitting and receiving data, applied to/configured in a network device side. The apparatus of transmitting and receiving data and the method of transmitting and receiving data in the embodiments of the fourth aspect provided in the present disclosure are produced based on the same inventive concept and have similar principles for solving problems. Therefore, reference is made to implementation of the method of transmitting and receiving data in the embodiments of the second aspect provided in the present disclosure for implementation of the apparatus of transmitting and receiving data, and the duplicate content will not be described herein again. As used below, the term "unit" or "module" may be a combination of software and/or hardware that implements a predetermined function. Although the system described in the following embodiments is preferably implemented in software, implementation of hardware, or a combination of software and hardware, is also possible and conceived.

FIG. 13 is another schematic diagram illustrating the apparatus of transmitting and receiving data according to the embodiments of the present disclosure. As illustrated in the FIG. 13, the apparatus includes:
an eighth receiving unit 1301 configured to receive information for indicating whether an RLC retransmission enhancement is supported transmitted by a terminal equipment.

Therefore, the network device is enabled to know capabilities of the terminal equipment related to the RLC retransmission enhancement, such that the terminal equipment is configured with the RLC retransmission enhancement consistent with the capabilities of the terminal equipment, and incorrect or invalid configuration of the RLC retransmission enhancement is avoided.

In some embodiments, reference is made to the embodiments of the fourth aspect for content related to the information. The above content is incorporated herein and will not be described herein again.

In some embodiments, the apparatus further includes:
an eighth transmitting unit 1302 (not shown) configured to transmit, to a terminal equipment, configuration information for configuring an RLC retransmission enhancement.

Reference is made to the embodiments of the fourth aspect of the present disclosure for content related to the configuration information. The above content is incorporated herein and will not be described herein again.

Therefore, details of RLC retransmission related enhancements, such as the number of retransmissions, retransmission occasions, an operation after receiving an RLC status PDU, and configuration of the RLC retransmission enhancements are described, which helps reliably transmitting XR data to a peer device within a packet delay budget (PDB) of an XR service, is easily implemented, and fills a gap in details related to the RLC retransmission enhancements.

Implementation and terms in this embodiment are similar to those in the embodiments of the fourth aspect of the present disclosure. The above related content is incorporated herein and will not be described herein again.

The above embodiments only illustrate the embodiments of the present disclosure. However, the present disclosure is not limited thereto, and appropriate variants may be made on the basis of the above embodiments. For example, the above embodiments may be used alone, or one or more of the above embodiments may be combined together.

It should be noted that the steps related to the present disclosure are only described above. However, the present disclosure is not limited thereto. The method of receiving data in the present disclosure may also include other steps. Reference may be made to the related arts for specific content of these steps.

### Embodiments of a Ninth Aspect

Embodiments of the present disclosure provide a communication system. Reference may be made to the FIG. 1. The communication system includes a network device 101, a first terminal equipment 102, and a second terminal equipment 103.

In the embodiments of the present disclosure, the first terminal equipment 102 is configured to implement the method of transmitting and receiving data in the first aspect and/or second aspect of the present disclosure, of which content is incorporated herein and will not be described herein again.

In the embodiments of the present disclosure, the second terminal equipment 103 is configured to implement the method of transmitting and receiving data in the third aspect of the present disclosure, of which content is incorporated herein and will not be described herein again.

In the embodiments of the present disclosure, the network device 101 is configured to implement the method of transmitting and receiving data in the third aspect and/or fourth aspect of the present disclosure, of which content is incorporated herein and will not be described herein again.

### Embodiments of a Tenth Aspect

### Embodiments of the present disclosure provide a terminal equipment.

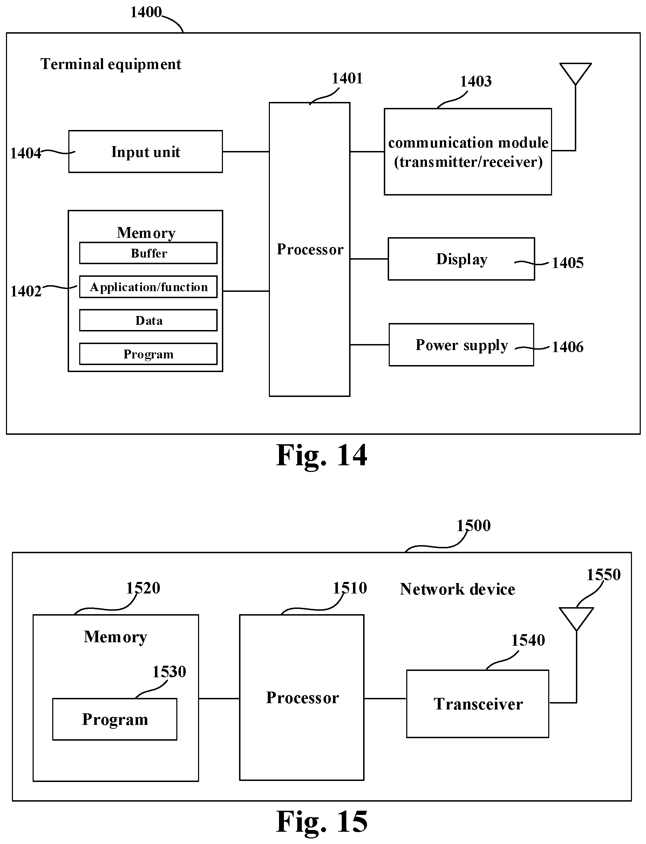

FIG. 14 is a schematic diagram illustrating a composition of a terminal equipment according to the embodiments of the present disclosure. The terminal equipment may be a remote terminal equipment. As illustrated in the FIG. 14, a terminal equipment 1400 may include a processor 1401 and a memory 1402 that stores data and a program and is coupled to the processor 1401. It should be noted that the figure is exemplary; and other types of structures may also be used to supplement or replace this structure, in order to implement telecommunication functions or other functions.

For example, the processor 1401 may be configured to execute a program to implement the method of transmitting and receiving data according to the embodiments of the first aspect. For example, the processor 1401 may be configured to transmit, to a peer device, an RLC service data unit (RLC SDU) or an RLC service data unit segment (RLC SDU segment) in an acknowledged mode (AM); and retransmit the RLC service data unit or the RLC service data unit segment at least once, before receiving an RLC status protocol data unit (RLC STATUS PDU) from the peer device.

For another example, the processor 1401 may be configured to execute a program to implement the method of transmitting and receiving data according to the embodiments of the second aspect. For example, the processor 1401 may be configured to transmit, to a network device, information for indicating whether an RLC retransmission enhancement is supported.

For another example, the processor 1401 may be configured to execute a program to implement the method of transmitting and receiving data according to the embodiments of the third aspect. For example, the processor 1401 may be configured to receive an RLC service data unit (RLC SDU) or an RLC service data unit segment (RLC SDU segment) in an acknowledged mode (AM) transmitted by the terminal equipment; and receive at least one retransmission of the RLC service data unit or the RLC service data unit segment from the terminal equipment, before transmitting, to the terminal equipment, an RLC status protocol data unit (RLC STATUS PDU).

As illustrated in the FIG. 14, the terminal equipment 1400 may further include: a communication module 1403, an input unit 1404, a display 1405, and a power supply 1406, wherein functions of these components are similar to those of the prior art and will not be described herein again. It should be noted that the terminal equipment 1400 does not necessarily include all the components illustrated in the FIG. 14, and the above components are not necessarily required. In addition, the terminal equipment 1400 may also include components not illustrated in the FIG. 14. Reference may be made to the related arts.

The embodiments of the present disclosure provide a network device, which may be, for example, a base station, however, the present disclosure is not limited thereto, and other network devices may also be involved.

FIG. 15 is a schematic diagram illustrating a composition of a network device according to the embodiments of the present disclosure. As illustrated in the FIG. 15, a network device 1500 may include: a processor 1510 (such as a central processing unit (CPU)) and a memory 1520 coupled to the processor 1510. The memory 1520 may store various data. In addition, the memory 1520 may store an information processing program 1530, and the program 1530 may be executed under the control of the processor 1510.

For example, the processor 1510 may be configured to execute a program to implement the method of transmitting and receiving data according to the embodiments of the third aspect. For example, the processor 1510 may be configured to receive an RLC service data unit (RLC SDU) or an RLC service data unit segment (RLC SDU segment) in an acknowledged mode (AM) transmitted by the terminal equipment; and receive at least one retransmission of the RLC service data unit or the RLC service data unit segment from the terminal equipment, before transmitting, to the terminal equipment, an RLC status protocol data unit (RLC STATUS PDU).

For example, the processor 1510 may be configured to execute a program to implement the method of transmitting and receiving data according to the embodiments of the fourth aspect. For example, the processor 1510 may be configured to receive information for indicating whether an RLC retransmission enhancement is supported transmitted by a terminal equipment.

In addition, as illustrated in the FIG. 15, the network device 1500 may further include: a transceiver 1540 and an antenna 1550, wherein functions of the above components are similar to those in the prior art and will not be described herein again. It should be noted that the network device 1500 does not necessarily include all the components illustrated in the FIG. 15. In addition, the network device 1500 may also include components not illustrated in the FIG. 15. Reference may be made to the related arts

The embodiments of the present disclosure also provide a computer-readable program, wherein when executed in a terminal equipment, the program enables a computer to execute the method of transmitting and receiving data according to the embodiments of the first aspect and/or second aspect and/or third aspect of the present disclosure in the terminal equipment.

The embodiments of the present disclosure also provide a storage medium storing a computer-readable program, wherein the computer-readable program enables a computer to implement the method of transmitting and receiving data according to the embodiments of the third aspect and/or fourth aspect of the present disclosure in a terminal equipment.

The embodiments of the present disclosure also provide a computer-readable program, wherein when executed in a network device, the program enables a computer to implement the method of transmitting and receiving data according to the embodiments of the third aspect and/or fourth aspect of the present disclosure in the network device.

The embodiments of the present disclosure also provide a storage medium storing a computer-readable program, wherein the computer-readable program enables a computer to implement the method of transmitting and receiving data according to the embodiments of the third aspect and/or fourth aspect of the present disclosure in a network device.

The above apparatus and method of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a magnetic disk, a CD, a DVD, a flash memory, etc.

The method/apparatus described with reference to the embodiments of the present disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. These software modules may respectively correspond to the steps shown in the drawings. And these hardware modules, for example, may be carried out by firming these software modules by using a field programmable gate array (FPGA).

The software modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information to the memory medium; or the memory medium may be a component of the processor. The processor and the memory medium may be located in an ASIC. The software modules may be stored in a memory of a mobile terminal and may also be stored in a memory card of a pluggable mobile terminal. For example, if equipment (such as a mobile terminal) employs an MEGA-SIM card of a relatively large capacity or a flash memory device of a large capacity, the software modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in the present disclosure. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

The present disclosure is described above with reference to particular embodiments. However, it should be understood by those skilled in the art that such a description is illustrative only, and not intended to limit the protection scope of the present disclosure. Various variants and amendments to the present disclosure may be made by those skilled in the art according to the spirit and principle of the present disclosure, and such variants and amendments also fall within the scope of the present disclosure.

As to implementations containing the above embodiments, supplements are further disclosed below:
1. A method of transmitting and receiving data, applied to a terminal equipment, including:
   transmitting, to a peer device, an RLC service data unit (RLC SDU) or an RLC service data unit segment (RLC SDU segment) in an acknowledged mode (AM); and
   retransmitting the RLC service data unit or the RLC service data unit segment at least once, before receiving an RLC status protocol data unit (RLC STATUS PDU) from the peer device.
2. The method according to supplement 1, wherein a value of the N is a positive integer configured by a network or predefined.
3. The method according to supplement 1, wherein the method further includes:
   receiving an RLC status protocol data unit transmitted by the peer device, the RLC status protocol data unit including a NACK for the RLC SDU or the RLC SDU segment; and
   retransmitting the RLC service data unit or the RLC service data unit segment M times.
4. The method according to supplement 1, further including:
   receiving configuration information for configuring an RLC retransmission enhancement transmitted by a network device; and
   wherein the configuration information includes:
      configuration of an initial state or default state of the RLC retransmission enhancement.
5. The method according to supplement 4, wherein the initial state or default state includes activation or deactivation.
6. The method according to supplement 4, wherein the initial state or default state is indicated by 1 bit; and/or
   the initial state or default state is indicated by a bitmap, and each bit in the bitmap corresponds to an initial state or default state of a configured DRB or a DRB in an RLC acknowledged mode or an RLC bearer or an RLC bearer in an RLC acknowledged mode.
7. The method according to supplement 4, wherein the configuration information is carried by an RRC message.
8. The method according to supplement 7, wherein the method further includes:
   configuring, by an RRC layer of the terminal equipment, an RLC retransmission enhancement to the RLC layer, or indicating an RLC layer to use an RLC retransmission enhancement, according to the RRC message; and/or
   indicating, by an RRC layer of the terminal equipment, the RLC layer to activate or deactivate an RLC retransmission enhancement, according to the RRC message.
9. The method according to supplement 1, wherein the method further includes:
   performing an RLC retransmission enhancement at a first moment before a PDCP discardTimer expires or when remaining time corresponding to at least one logical channel group is less than a first threshold; and/or
   stopping an RLC retransmission enhancement when a PDCP discardTimer expires or at a second moment before a PDCP discardTimer expires or remaining time corresponding to at least one logical channel group is less than a second threshold or remaining time corresponding to at least one logical channel group is zero.
10. The method according to supplement 9, wherein a first time difference between the first moment and an expiration of the PDCP discardTimer, and/or a second time difference between the second moment and an expiration of the PDCP discardTimer and/or the first threshold and/or the second threshold are configured by a network device or predefined.

## Claims

1. An apparatus of transmitting and receiving data, applied to a terminal equipment, the apparatus comprising:
a first transmitting unit configured to transmit, to a peer device, an RLC service data unit (RLC SDU) or an RLC service data unit segment (RLC SDU segment) in an acknowledged mode (AM); and
a second transmitting unit configured to transmit N times retransmissions of the RLC service data unit or the RLC service data unit segment, before receiving an RLC status protocol data unit (RLC STATUS PDU) from the peer device.

2. The apparatus according to claim 1, wherein the RLC status protocol data unit comprises relevant information of feedback on the RLC SDU or the RLC SDU segment, and the relevant information is acknowledgment (ACK) information or negative acknowledgment (NACK) information.

3. The apparatus according to claim 1, wherein the N times retransmissions are recorded in a retransmission counter associated with the RLC service data unit or the RLC service data unit segment.

4. The apparatus according to claim 3, wherein the N times retransmissions are recorded as one time in the retransmission counter; or the N times retransmissions are recorded as N times in the retransmission counter.

5. The apparatus according to claim 1, wherein the N times retransmissions are not recorded in a retransmission counter associated with the RLC service data unit or the RLC service data unit segment.

6. The apparatus according to claim 1, wherein the N times retransmissions are located in continuous slots or symbols; or N times retransmissions are located in discontinuous slots or symbols.

7. The apparatus according to claim 6, wherein an interval of the discontinuous slots or symbols is:
configured by a network device; and/or
predefined; and/or
determined according to a position of an uplink grant (UL grant) configured or scheduled by a network device.

8. The apparatus according to claim 1, further comprising:
a first receiving unit configured to receive configuration information for configuring an RLC retransmission enhancement transmitted by a network device.

9. The apparatus according to claim 8, wherein the configuration information is related to or configured with at least one of following:
the terminal equipment;
a data radio bearer (DRB) of the terminal equipment;
a data radio bearer (DRB) of the terminal equipment configured with an RLC acknowledged mode (RLC AM);
an RLC bearer of the terminal equipment; or
an RLC bearer of the terminal equipment configured with an RLC acknowledged mode (RLC AM).

10. The apparatus according to claim 8, wherein the configuration information comprises at least one of following:
whether to use an RLC retransmission enhancement;
an initiation condition and/or a termination condition and/or a duration of using an RLC retransmission enhancement;
the number N and/or M of RLC retransmissions;
whether RLC retransmissions are in continuous slots or symbols;
an RLC retransmission-related timer; or
an interval of RLC retransmissions.

11. The apparatus according to claim 1, further comprising:
a second receiving unit configured to receive indication information for indicating a state of an RLC retransmission enhancement transmitted by a network device.

12. The apparatus according to claim 11, wherein the state of the RLC retransmission enhancement comprises activation or deactivation.

13. The apparatus according to claim 12, wherein the state of the RLC retransmission enhancement is represented by a bitmap, and each bit in the bitmap corresponds to an RLC retransmission enhancement state of a configured DRB or a DRB in an RLC acknowledged mode or an RLC bearer or an RLC bearer in an RLC acknowledged mode or a DRB configured with an RLC retransmission enhancement or an RLC bearer configured with an RLC retransmission enhancement.

14. The apparatus according to claim 11, wherein the indication information is carried by downlink control information (DCI) or a medium access control control element (MAC CE) or an RLC control protocol data unit (RLC control PDU) or a PDCP control protocol data unit (PDCP control PDU).

15. The apparatus according to claim 1, further comprising:
a third processing unit configured to perform an RLC retransmission enhancement at a first moment before a PDCP discard timer expires or when remaining time corresponding to at least one logical channel group is less than a first threshold; and/or stop an RLC retransmission enhancement when a PDCP discard timer expires or at a second moment before a PDCP discard timer expires or remaining time corresponding to at least one logical channel group is less than a second threshold or remaining time corresponding to at least one logical channel group is zero.

16. The apparatus according to claim 1, further comprising:
a third transmitting unit configured to transmit, to a network device, information for indicating whether an RLC retransmission enhancement is supported.

17. The apparatus according to claim 16, wherein the information is carried by a UE capability information message, or an RRC connection establishment complete message, or an RRC reconfiguration complete message, or a UE assistance information message.

18. The apparatus according to claim 16, wherein
the information is represented by 1 bit that an RLC retransmission enhancement is supported; and/or
the information is represented by 1 bit that an RLC retransmission enhancement is supported for a configured DRB or a DRB in an RLC acknowledged mode or an RLC bearer or an RLC bearer in an RLC acknowledged mode; and/or
the information is represented by a bitmap, and each bit in the bitmap represents that an RLC retransmission enhancement is supported for a configured DRB or a DRB in an RLC acknowledged mode or an RLC bearer or an RLC bearer in an RLC acknowledged mode.

19. An apparatus of transmitting and receiving data, applied to a peer device of a terminal equipment, the apparatus comprising:
a third receiving unit configured to receive an RLC service data unit (RLC SDU) or an RLC service data unit segment (RLC SDU segment) in an acknowledged mode (AM) transmitted by the terminal equipment; and
a fourth receiving unit configured to receive N times retransmissions of the RLC service data unit or the RLC service data unit segment from the terminal equipment before transmitting an RLC status protocol data unit (RLC STATUS PDU) to the terminal equipment.

20. An apparatus of transmitting and receiving data, applied to a network device, the apparatus comprising:
an eighth receiving unit configured to receive information for indicating whether an RLC retransmission enhancement is supported transmitted by a terminal equipment.
